# EUROPÄISCHE PATENTSCHRIFT

(11) **EP 3 584 774 B1**
(45) Veröffentlichungstag und Bekanntmachung des Hinweises auf die Patenterteilung: **05.03.2025**
(21) Anmeldenummer: 18020263.2
(22) Anmeldetag: 19.06.2018
(51) Int. Cl.: G08B 17/107

(54) **STREULICHTDETEKTOR UND ANSAUGBRANDERKENNUNGSSYSTEM MIT EINEM STREULICHTDETEKTOR**
DETECTOR FOR SCATTERED LIGHT AND SUCTION FIRE DETECTING SYSTEM WITH A DETECTOR FOR SCATTERED LIGHT
DÉTECTEUR DE LUMIÈRE DIFFUSÉE ET SYSTÈME DE DÉTECTION D'INCENDIE AU NIVEAU D'ASPIRATION POURVU D'UN DÉTECTEUR DE LUMIÈRE DIFFUSÉE

(43) Veröffentlichungstag der Anmeldung: 25.12.2019
(73) Patentinhaber: Wagner Group GmbH, 30853 Langenhagen (DE)
(72) Erfinder: Hartwig, Jonas, 30163 Hannover (DE)
(74) Vertreter: Götz, Georg Alois

(56) Entgegenhaltungen:
- EP-A1- 3 327 688
- EP-B1- 3 029 647
- WO-A1-2009/036988
- GB-A- 1 179 409
- JP-B2- 4 981 404

## Beschreibung

Die Erfindung betrifft einen Streulichtdetektor mit den Merkmalen des Anspruchs 1 zur Detektion von Partikeln, insbesondere Rauchpartikeln in einem Prüffluid, insbesondere zur Verwendung in einem Ansaugbranderkennungssystem, mit einem Prüfbereich, welcher zur Ausbildung eines von dem Prüffluid durchströmbaren Strömungspfads einen Strömungseinlass und einen Strömungsauslass aufweist, einem Lichtsender, welcher einen Lichtstrahl in einer Ausstrahlrichtung sendet, wobei der gesendete Lichtstrahl einen Überschneidungsbereich mit dem Strömungspfad bildet, einem Lichtempfänger zum Empfang eines im Überschneidungsbereich an Partikeln gestreuten Streulichtanteils und einer Leiterplatte, wobei der Lichtsender und der Lichtempfänger mit einer dem Prüfbereich zugewandten Vorderseite der Leiterplatte als oberflächenmontierbare Bauteile verbunden sind. Die Erfindung betrifft außerdem ein Ansaugbranderkennungssystem mit den Merkmalen des Anspruchs 11 mit einem solchen Streulichtdetektor, wobei das Ansaugbranderkennungssystem eine oder mehrere Ansaugöffnungen, die zum Ansaugen eines Prüffluids in einem oder mehreren Überwachungsräumen angeordnet sind, ein Rohr- und/oder Schlauchsystem zur fluidleitenden Verbindung der einen oder der mehreren Ansaugöffnungen mit dem Streulichtdetektor und eine Ansaugeinrichtung zur Erzeugung einer Strömung und/oder eines Unterdrucks innerhalb des Rohr- und/oder Schlauchsystems aufweist. Schließlich betrifft die Erfindung ein zugehöriges Verfahren mit den Merkmalen des Anspruchs 13 zur Detektion von in einem Prüffluid enthaltenen Partikeln, insbesondere Rauchpartikeln, insbesondere zur Erkennung eines Brands.

Neben der Branderkennung und -überwachung eines Raums mittels einfacher Deckenrauchmelder eignen sich Streulichtdetektoren zur Verwendung für sogenannte Ansaugbranderkennungssysteme, auch als Ansaugrauchmelder bezeichnet, welche ununterbrochen eine ausreichend repräsentative Prüffluidmenge, insbesondere Luftmenge, aus einem Überwachungsraum, einem zu überwachenden Raum oder Bereich oder einer zu überwachenden Umgebung, ansaugen und dem im Ansaugweg angeordneten Streulichtdetektor zuführen. Das angesaugte Prüffluid wird entlang eines Strömungspfads durch einen Prüfbereich des Streulichtdetektors geleitet, wobei ein von dem Lichtsender emittierter Lichtstrahl auf den Prüfbereich gerichtet ist. Zur Verwendung als Lichtsender haben sich Dioden, sogenannte lichtemittierende Dioden (LED), auch einfach als Leuchtdioden bezeichnet, bewährt. Ein erstes Schnittvolumen, in welchem sich der emittierte bzw. gesendete Lichtstrahl und der Strömungspfad des Prüffluids überschneiden, bildet einen Überschneidungsbereich aus, innerhalb dessen gegebenenfalls vorhandene, angesaugte Partikel, insbesondere Rauchpartikel eine Streuung des einfallenden Lichts bewirken. Zur Detektion des gestreuten Streulichts ist ein Sichtfeld eines Lichtempfängers, zumeist einer Photodiode (PD), in einer Empfangsrichtung auf den Überschneidungsbereich gerichtet. Ein zweites Schnittvolumen, in welchem der Lichtstrahl des Lichtsenders und das Sichtfeld des Lichtempfängers zusammenfallen, wird als Streulichtzentrum bezeichnet. Ein drittes Schnittvolumen, in welchem sich der Überschneidungsbereich und das Streulichtzentrum, d.h. der Lichtstrahl des Lichtsenders, das Sichtfeld des Lichtempfängers und der Strömungspfad des Prüffluids überschneiden, bildet ein Detektionsvolumen aus. Ein Streulichtanteil des dort an ggf. vorhandenen, insbesondere angesaugten Partikeln bzw. Rauchpartikeln gestreuten Streulichts wird durch den Lichtempfänger erfasst und mittels einer nachgeschalteten Auswertung zur Erkennung eines Brands herangezogen. Aufgrund der hohen Sensibilität von Ansaugbranderkennungssystemen ist eine Branderkennung häufig bereits während der Entstehungsphase des Brands möglich, weshalb Ansaugrauchmelder der sogenannten Brandfrüherkennung oder sogar Brandfrühesterkennung zugeordnet werden.

Ein gattungsgemäßer photoelektrischer Partikelsensor zur Erkennung von an Partikeln gestreutem Streulicht für ein Ansaugbranderkennungssystem ist aus der EP 0 729 024 A2 bekannt. Der Partikelsensor umfasst eine von einer Behausung umgebene optische Kammer mit einem Lufteinlass und einem Luftauslass. Die optische Kammer bildet eine Luftpassage aus, indem die angesaugte Luft über einen Lufteinlass in die Kammer und über einen Luftauslass aus der Kammer geleitet wird. Der Lichtsender sowie der Lichtempfänger sind innerhalb der optischen Kammer angeordnet bzw. ragen in diese hinein und stehen daher in direktem Kontakt mit der Luftpassage. Dies führt zu einem komplexen Aufbau der optischen Kammer sowie damit einhergehenden Verschmutzungen, Partikelablagerungen und in der Folge zu einer reduzierten Ansprechempfindlichkeit bzw. erhöhten Fehlerrate des Partikelsensors. Zur Stromversorgung des Lichtsenders sowie des Lichtempfängers bzw. zur Weiterleitung der empfangenen Signale sind zudem baulich getrennte Schaltungsträger und/oder Leiterplatten notwendig, wodurch erhöhte Herstellungskosten durch eine aufwändigere Produktion verursacht werden.

In der EP 3 029 647 B1 ist ein Streulichtrauchmelder beschrieben, welcher einen in einer Gehäuseschale aufgenommenen Schaltungsträger aufweist. Mit diesem Schaltungsträger sind sowohl eine Leuchtdiode als Lichtsender als auch eine Photodiode als Lichtempfänger verbunden. Eine möglichst geringe Bauhöhe des Streulichtrauchmelders wird dadurch ermöglicht, dass die Dioden direkt, d.h. unmittelbar und ohne zusätzliche Unterbauten, beispielsweise als oberflächenmontierbare Bauelemente (SMD = Surface Mounted Device) mit dem Schaltungsträger verbunden sind. Die Ausstrahlrichtung oder die Empfangsrichtung herkömmlicher Dioden verläuft somit zwangsläufig orthogonal zum Schaltungsträger. Um ein Streulichtzentrum, das heißt ein Schnittvolumen, in welchem der gesendete Lichtstrahl der Leuchtdiode und das Sichtfeld der Photodiode einander überschneiden, auszubilden, ist mindestens eine der Dioden als sogenannte "Sidelooker"-LED ausgeführt. Durch die Verwendung einer solchen "Sidelooker"-LED kann eine "seitliche" Ausstrahlrichtung, parallel zum Schaltungsträger erzielt werden. Nachteilig an dieser Ausführungsform ist zum einen, dass der gesamte Schaltungsträger mit allen aktiven optischen Bauteilen innerhalb des Prüffluids, hier unmittelbar innerhalb des Überwachungsraums bzw. der zu überwachenden Umgebung angeordnet ist, zum anderen sind die Ausstrahl- bzw. Empfangsrichtung der Dioden auf eine parallele ("Sidelooker"-Diode) oder orthogonale Anordnung (herkömmliche Diode) bzgl. des Schaltungsträgers beschränkt.

Aus dem Stand der Technik sind verschiedene Anordnungsmöglichkeiten des Lichtempfängers in Relation zu dem Lichtsender bekannt. Der zwischen der Ausstrahlrichtung des gesendeten Lichtstrahls und der Sichtrichtung des Lichtempfängers aufgespannte Winkel wird als Streuwinkel bezeichnet. Bei einem Streuwinkel zwischen 0° und 90° spricht man von Vorwärtsstreuung, bei einem Streuwinkel größer 90° von Rückwärtsstreuung. Aus dem Stand der Technik sind zudem verschiedene Möglichkeiten zur Umlenkung und/oder Reflexion des von einer Leuchtdiode gesendeten Lichtstrahls oder des Streulichtpfads eines gestreuten Streulichtanteils bekannt.

Im nachfolgenden und entsprechend dem üblichen Verständnis beschreibt der Begriff "Reflexion" die einmalige Richtungsänderung eines Lichtstrahls mittels eines Reflektors, bspw. eines Spiegels. Ein auf die Oberfläche des Reflektors auftreffender Lichtstrahl wird von dieser zurückgeworfen (reflektiert), wobei der Einfallswinkel des Lichtstrahls gleich dem Ausfallswinkel ist. Der Ausdruck "Umlenkung" eines Lichtstrahls beschreibt hingegen die Änderung der Richtung des Lichtstrahls mittels eines Lichtwellenleiters, bspw. einer optischen Faser. Der Lichtstrahl tritt, anders als bei der Einfachreflexion, in das Medium des Lichtwellenleiters ein und wird in dessen Inneren weitergeleitet, wodurch beliebige Richtungsänderungen möglich sind. Der Einfallswinkel des Lichtstrahls in den Lichtwellenleiter muss somit nicht dem Austrittswinkel entsprechen. Demgegenüber bezeichnet der Ausdruck "Fokussierung" eines Lichtstrahls keine Richtungsänderung. Durch Brechung, bspw. mittels einer Sammellinse, erfolgt hierbei eine Erhöhung der Lichtintensität und/oder eine Veränderung der Weite des Sichtfelds einer Photodiode bzw. des Lichtstrahls einer Leuchtdiode.

Die Verwendung einer Linse im Bereich der photoelektrischen Detektion ist beispielsweise aus der EP 2 881 719 A1 im Zusammenhang mit der Funkendetektion bekannt. Anders als bei der Partikel-, insbesondere Rauchpartikeldetektion kann bei der Funkendetektion auf die Verwendung eines Lichtsenders verzichtet werden, da die zu detektierenden Funken bereits selbst als Lichtquelle dienen. Der eigentliche Lichtempfänger ist hier außerhalb eines Kanals, in welchem ein zu überwachender, kombinierter Material- und Gasstrom strömt, angeordnet. Ein optisches Stäbchen leitet die von den Funken emittierte Strahlung an den Lichtempfänger weiter und ragt in den Kanal hinein, wo es mittels einer Linse vom Material- und Gasstrom abgeschirmt wird. Gleichzeitig wird die Weite des Sichtfelds je nach Ausgestaltung der Linse verändert, insbesondere vergrößert.

Aus der US 9,267,885 B2 ist ein optischer Streulichtdetektor bekannt, bei welchem vorgeschlagen wird, die Ausstrahlrichtung des Lichtstrahls einer Leuchtdiode sowie den Streulichtpfad eines gestreuten Streulichtanteils mittels zweier in eine Messkammer ragender Lichtreflektoren, insbesondere Prismen, zu ändern. Hierbei ist ein erstes Prisma auf die Leuchtdiode gerichtet, um deren Lichtstrahl in einem Winkel in eine Detektionszone innerhalb der Messkammer zu reflektieren, und ein zweites Prisma auf eine Photodiode, um das aus der Detektionszone stammende Streulicht in demselben Winkel in Richtung der Photodiode zu reflektieren. Die Lichtreflektoren sind auf einem gemeinsamen Stützteil, welches diese mittelbar mit einer Leiterplatte verbindet, angeordnet. Auch aus der WO 2016/102891 A1 ist ein ähnlicher Aufbau eines Streulichtdetektors bekannt, welcher sich von dem zuvor beschriebenen Aufbau im Wesentlichen dadurch unterscheidet, dass anstelle der beiden Prismen zwei in die Messkammer ragende Lichtleiter zum Einsatz kommen. Mittels der jeweils vorgeschlagenen Anordnung der Dioden sowie der jeweiligen Reflektoren bzw. Lichtleiter zueinander ist ausschließlich die Erfassung von Vorwärtsstreuung in einem begrenzten Streuwinkelbereich möglich.

Eine Aufgabe der vorliegenden Erfindung ist es daher, einen gegenüber dem Stand der Technik verbesserten Streulichtdetektor bereitzustellen, welcher insbesondere eine kostengünstigere, kompaktere und langlebigere Bauweise bei gleichzeitig hoher und über die Betriebszeit gleichbleibender Ansprechempfindlichkeit, geringerer Fehlalarmrate und Detektionsgenauigkeit aufweist, insbesondere um die speziellen Anforderungen, wie den vergleichsweise geringen zur Verfügung stehenden Installationsraum, eines Ansaugbranderkennungssystems zu erfüllen.

Erfindungsgemäß wird die Aufgabe durch einen Streulichtdetektor nach Anspruch 1, ein Ansaugbranderkennungssystem mit einem Streulichtdetektor nach Anspruch 11 und ein Verfahren zur Detektion von in einem Prüffluid enthaltenen Partikeln, insbesondere Rauchpartikeln nach Anspruch 13 gelöst.

Ein erfindungsgemäßer Streulichtdetektor der eingangs näher bezeichneten Art kennzeichnet sich dadurch, dass der von dem Lichtsender gesendete Lichtstrahl mittels eines den Lichtstrahl umlenkenden Lichtwellenleiters in den Prüfbereich geleitet wird und der Lichtempfänger derart angeordnet ist, dass ein direkter oder indirekter Streulichtpfad zwischen dem Lichtempfänger und dem Überschneidungsbereich verläuft.

Erfindungsgemäß ist der Prüfbereich durch eine Prüfbereichsumwandung begrenzt, wobei die Prüfbereichsumwandung eine oder mehrere Ausnehmungen zur Aufnahme von optischen Bauteilen und/oder zur Erzeugung mehrerer Lichtdurchlässe aufweist, wobei der Lichtsender und der Lichtempfänger sowie die den Lichtsender und den Lichtempfänger aufweisende Leiterplatte außerhalb der den Prüfbereich begrenzenden Prüfbereichsumwandung angeordnet ist, wobei der von dem Lichtsender gesendete Lichtstrahl mittels eines den Lichtstrahl umlenkenden Lichtwellenleiters in den Prüfbereich geleitet wird, wobei der Lichtstrahl in das Medium des Lichtwellenleiters eintritt und in dessen Inneren weitergeleitet wird.

Dabei mündet erfindungsgemäß der Lichtwellenleiter innerhalb einer der Ausnehmungen der Prüfbereichsumwandung, wird von einer der Ausnehmungen aufgenommen oder durchsetzt eine der Ausnehmungen, wobei innerhalb des zwischen dem Lichtempfänger und dem Überschneidungsbereich verlaufenden direkten Streulichtpfads ein Lichtdurchlass oder ein nicht reflektierendes optisches Bauteil angeordnet ist und/oder der zwischen dem Lichtempfänger und dem Überschneidungsbereich verlaufende indirekte Streulichtpfad mittels eines, innerhalb einer der Ausnehmungen der Prüfbereichsumwandung und im Sichtfeld des Lichtempfängers angeordneten Lichtwellenleiters ausgebildet ist.

In einer vorteilhaften Ausführung sind der Lichtsender, insbesondere eine Leuchtdiode (LED) und/oder der Lichtempfänger, insbesondere eine Photodiode (PD) direkt bzw. unmittelbar, d.h. ohne zusätzliche oder zwischengeordnete Unterbauten bzw. als oberflächenmontierbare Bauelemente (auch SMD = Surface Mounted Device bezeichnet) mit einer Seite der Leiterplatte, mit deren Vorderseite, verbunden und weisen orthogonal von der Leiterplatte weg bzw. sind die Ausstrahlrichtung des Lichtsenders und das Sichtfeld des Lichtempfängers orthogonal zur Vorderseite der Leiterplatte ausgerichtet. Als Vorderseite der Leiterplatte wird die Seite der Leiterplatte bezeichnet, die dem Prüfbereich zugewandt bzw. am nächsten ist. Grundsätzlich können alle auf der Leiterplatte montierten Bauteile auf der Vorderseite der Leiterplatte angebracht sein. Jedoch ist auch eine beidseitige Bestückung der Leiterplatte auf der Vorderseite und der der Vorderseite gegenüberliegenden, von dem Prüfbereich abgewandten Rückseite denkbar. Beispielsweise können auch Schaltungen zur Ansteuerung des Lichtsenders oder zur Verstärkung und Auswertung des Lichtempfängersignals auf der Leiterplatte angeordnet sein.

Energie wandelnde optische Bauteile, die beispielsweise elektrische Energie verbrauchen oder erzeugen, wie der Lichtsender oder der Lichtempfänger, werden nachfolgend auch als aktive optische Bauteile bezeichnet. Optische Bauteile ohne wesentliche Energieumwandlung wie beispielsweise Linsen, Lichtwellenleiter oder Filter werden nachfolgend auch als passive optische Bauteile bezeichnet.

Zweckmäßigerweise kann innerhalb des Prüfbereichs zusätzlich eine Lichtfalle zur Absorption eines nicht gestreuten Lichtanteils des von dem Lichtsender gesendeten Lichtstrahls angeordnet sein.

Im Sinne der Erfindung ist somit vorgesehen, dass der von dem Lichtsender gesendete, insbesondere orthogonal zur Vorderseite der Leiterplatte verlaufende Lichtstrahl durch einen Lichtwellenleiter umgelenkt und in den Prüfbereich gerichtet wird, um mit dem innerhalb des Prüfbereichs entlang des Strömungspfads strömenden Prüffluids einen Überschneidungsbereich auszubilden. Der Lichtempfänger ist derart auf der Leiterplatte angeordnet, dass zwischen dem Überschneidungsbereich und dem Lichtempfänger ein direkter Streulichtpfad ausgebildet ist, d.h. ein gerader, nicht reflektierter und nicht umgelenkter Verlauf eines im Überschneidungsbereich an einem Partikel gestreuten Streulichtanteils. Alternativ ist der Lichtempfänger derart angeordnet, dass zwischen dem Überschneidungsbereich und dem Lichtempfänger ein indirekter Streulichtpfad ausgebildet ist, d.h. ein "geknickter" und/oder "gekrümmter", reflektierter und/oder umgelenkter Verlauf eines im Überschneidungsbereich an einem Partikel gestreuten Streulichtanteils.

Anders ausgedrückt ist zur Ausbildung eines direkten Streulichtpfads das Sichtfeld des Lichtempfängers in einer Empfangsrichtung direkt oder unmittelbar auf den Überschneidungsbereich gerichtet. Auf diese Weise kann das Streulichtzentrum, in welchem sich der Lichtstrahl des Lichtsenders und das Sichtfeld des Lichtempfängers überschneiden, mit einer geringen Anzahl an optischen Bauteilen und somit mit geringem Aufwand innerhalb des Überschneidungsbereichs, in welchem sich der emittierte bzw. gesendete Lichtstrahl des Lichtsenders und der Strömungspfad des Prüffluids überschneiden, zur Ausbildung des Detektionsvolumens, platziert sein. Entsprechend ist ein indirekter Streulichtpfad ausgebildet, wenn das Sichtfeld des Lichtempfängers nicht direkt oder unmittelbar auf den Überschneidungsbereich gerichtet ist, sondern, insbesondere passive, optische Bauteile zur Reflexion oder Umlenkung des Streulichtanteils innerhalb des Sichtfelds des Lichtempfängers angeordnet sind und somit zur Platzierung des Streulichtzentrums innerhalb des Überschneidungsbereichs eingesetzt werden.

Die Erfindung sieht folglich einen modifizierbaren Aufbau eines Streulichtdetektors mit einer Vielzahl an Anordnungsoptionen optischer Bauteile vor, bei welchem alle aktiven optischen Bauteile auf einer einzigen Leiterplatte, insbesondere auf der Vorderseite dieser Leiterplatte, angeordnet sind, der Lichtstrahl des Lichtsenders mit einem Lichtwellenleiter zur Ausbildung des Überschneidungsbereichs mit dem Prüffluid bedarfsweise umgelenkt wird und der Lichtempfänger bedarfsweise und/oder wahlweise zur Ausbildung eines direkten oder eines indirekten Streulichtpfads zwischen dem Überschneidungsbereich und dem Lichtempfänger angeordnet ist. Insbesondere ermöglicht ein flexibler Aufbau eine angepasste Verwendung des Streulichtdetektors für ein Ansaugbranderkennungssystem, indem der Lichtstrahl des Lichtsenders auf den Strömungspfad des Prüffluids richtbar ist und der Lichtempfänger zur Ausbildung des Streulichtzentrums bzw. des Detektionsvolumens innerhalb des Überschneidungsbereichs und zur Erfassung des im Detektionsvolumen gestreuten Streulichtanteils entweder direkt auf den Überschneidungsbereich gerichtet ist bzw. der Überschneidungsbereich innerhalb des Sichtfelds des Lichtempfängers liegt oder indirekt auf den Überschneidungsbereich gerichtet ist bzw. der Überschneidungsbereich außerhalb des Sichtfelds des Lichtempfängers liegt und der gestreute Streulichtanteil mittels eines, insbesondere passiven, optischen Bauteils, vorzugsweise eines Lichtwellenleiters, umgelenkt oder reflektiert wird. Auf diese Weise kann eine minimale Anzahl an Komponenten, besonders an aktiven und passiven optischen Bauteilen realisiert werden, wodurch insbesondere der Herstellungsaufwand und die daraus folgenden Herstellungskosten verringert werden. Durch die Anordnung aller aktiven optischen Bauteile auf einer einzigen Leiterplatte werden zusätzliche Herstellungskosten eingespart und der Aufbau des Streulichtdetektors erheblich vereinfacht. In einer besonders vorteilhaften Ausführungsform sind sowohl alle aktiven optischen Bauteile als auch passiven optischen Bauteile außerhalb des Strömungspfads des Prüffluids, insbesondere außerhalb des Prüfbereichs, angeordnet oder ragt ausschließlich das den Lichtstrahl des Lichtsenders umlenkende, passive optische Bauteil, der Lichtwellenleiter, in den Prüfbereich hinein. Auf diese Weise lassen sich Verschmutzungen des Prüfbereichs durch Partikelablagerungen an optischen Bauteilen, welche gerade bei Ansaugbranderkennungssystemen verstärkt auftreten, erheblich verringern oder sogar vollständig vermeiden.

In einer vorteilhaften Ausführungsform der Erfindung verläuft der von dem Lichtsender gesendete Lichtstrahl in einer entlang des Strömungspfads gerichteten Ausstrahlrichtung.

Alternativ zu dieser Ausführungsform verläuft der von dem Lichtsender gesendete Lichtstrahl vorzugsweise in einer auf den Strömungspfad gerichteten Ausstrahlrichtung.

Dadurch, dass der von dem Lichtsender gesendete Lichtstrahl in einer entlang des Strömungspfads gerichteten, insbesondere parallel zum Strömungspfad gerichteten Ausstrahlrichtung verläuft, kann ein größerer Überschneidungsbereich des Lichtstrahls und des Strömungspfads ausgebildet werden. Um den vergrößerten Überschneidungsbereich für eine Multidetektion, d. h. die Erfassung von Streulicht mittels mehrerer Lichtempfänger zu nutzen, können mittels dieser bspw. mehrere, jeweilige Streulichtzentren innerhalb des Strömungspfads platziert werden, um zugeordnete Detektionsvolumina in verschiedenen Bereichen des Prüfbereichs auszubilden. Alternativ ist durch die Ausrichtung des Lichtstrahls in einer auf den Strömungspfad gerichteten Ausstrahlrichtung, insbesondere in einer orthogonal zu dem Strömungspfad verlaufenden Ausstrahlrichtung, eine präzisere Abgrenzung des Detektionsvolumens möglich, indem ein kleinerer Überschneidungsbereich zwischen dem Lichtstrahl und dem Strömungspfad ausgebildet ist. Neben den Grenzfällen eines parallel zu dem Strömungspfad gerichteten Lichtstrahls, bei welchem ein Überschneidungswinkel zwischen dem Strömungspfad des Prüffluids und der Ausstrahlrichtung des Lichtsenders 0° beträgt oder eines orthogonal zu dem Strömungspfad gerichteten Lichtstrahls, bei welchem der Überschneidungswinkel 90° beträgt, sind auch dazwischen liegende Ausstrahlrichtungen, welche einen Überschneidungswinkel in einem Bereich zwischen 0° und 90° aufspannen, einstellbar.

Eine vorteilhafte Ausführungsform des Streulichtdetektors zeichnet sich dadurch aus, dass innerhalb des zwischen dem Lichtempfänger und dem Überschneidungsbereich verlaufenden direkten Streulichtpfads ein nicht reflektierendes, nicht umlenkendes optisches Bauteil oder Medium angeordnet ist. Ein solches nicht reflektierenes, nicht umlenkendes optisches Bauteil oder Medium ist beispielsweise eine Linse oder einfaches Fensterglas.

In einer alternativen Ausführungsform des Streulichtdetektors ist der zwischen dem Lichtempfänger und dem Überschneidungsbereich verlaufende indirekte Streulichtpfad mittels eines den gestreuten Streulichtanteil umlenkenden Lichtwellenleiters ausgebildet. Hierdurch kann der Lichtempfänger an nahezu beliebigen Positionen der Leiterplatte angeordnet und der verfügbare Platz dadurch besser ausgenutzt werden.

Hiernach sind innerhalb eines direkten Streulichtpfads entweder überhaupt keine optischen Bauteile und ausschließlich das in dem Prüfbereich vorhandene Medium oder in den Prüfbereich angesaugte Prüffluid, im Regelfall Luft, angeordnet oder ausschließlich weder reflektierende noch umlenkende, insbesondere passive, optische Bauteile wie bspw. eine Linse oder einfaches Fensterglas. Hingegen wird ein indirekter Streulichtpfad vorzugsweise mittels eines den gestreuten Streulichtanteil umlenkenden Lichtwellenleiters ausgebildet.

Gemäß einer weiteren, bevorzugten Ausführungsform ist eine erste planare Optik zum Fokussieren des Lichtstrahls zwischen dem Lichtsender und dem Überschneidungsbereich angeordnet und/oder eine zweite planare Optik zum Fokussieren eines entlang des Streulichtpfads gestreuten Streulichtanteils zwischen dem Lichtempfänger und dem Überschneidungsbereich angeordnet.

Durch die Verwendung planarer, d.h. flacher bzw. flächig ausgebildeter Optiken, insbesondere Linsen bspw. Sammel- oder Zerstreuungslinsen, aber auch sogenannter Fresnel-Linsen lässt sich der Lichtstrahl des Lichtsenders und/oder der im Streulichtpfad gestreute Streulichtanteil fokussieren und die Weite und/oder Lichtintensität des Lichtstrahls und/oder des Streulichtanteils bzw. das Sichtfeld eines Lichtempfängers variieren. Vorzugsweise ist die erste und/oder die zweite planare Optik parallel oder in einem, insbesondere in einem Bereich zwischen 0° und 45° liegenden Winkel zu der Vorderseite der Leiterplatte ausgerichtet und/oder einem zugeordneten Lichtsender bzw. Lichtempfänger gegenüberliegend angeordnet.

Die Anordnung einer Sammellinse vor dem Lichtsender, insbesondere der Leuchtdiode, ermöglicht bspw. eine punktuelle Ausbildung des Überschneidungsbereichs, in welchem der Strömungspfad des Prüffluids und der Lichtstrahl des Lichtsenders einander überschneiden. Die Anordnung einer Sammellinse vor dem Lichtempfänger, insbesondere der Photodiode, hingegen bewirkt einen vergrößerten Detektionsbereich. Der auf die Sammellinse einfallende Streulichtanteil wird gebündelt, wobei der Brenn- oder Fokuspunkt auf den Lichtempfänger ausgerichtet ist. Auf diese Weise ist es möglich, Streulichtanteile, die andernfalls an dem Lichtempfänger vorbei liefen, "abzufangen" und zu detektieren.

Erfindungsgemäß ist der Prüfbereich durch eine Prüfbereichsumwandung begrenzt, wobei die Prüfbereichsumwandung eine oder mehrere Ausnehmungen zur Aufnahme von optischen Bauteilen und/oder zur Erzeugung eines oder mehrerer Lichtdurchlässe aufweist, wobei der Lichtsender und der Lichtempfänger sowie die den Lichtsender und den Lichtempfänger aufweisende Leiterplatte außerhalb der den Prüfbereich begrenzenden Prüfbereichsumwandung angeordnet.

Ebenso können in Weiterbildung dieser Ausführungsform der Lichtwellenleiter und/oder die erste planare Optik und/oder die zweite planare Optik und/oder weitere optische Bauteile außerhalb des Prüfbereichs, insbesondere außerhalb der den Prüfbereich begrenzenden Prüfbereichsumwandung, angeordnet sein.

Erfindungsgemäß ist dann innerhalb des zwischen dem Lichtempfänger und dem Überschneidungsbereich verlaufenden direkten Streulichtpfads ein Lichtdurchlass oder ein nicht reflektierendes optisches Bauteil angeordnet und/oder ist der zwischen dem Lichtempfänger und dem Überschneidungsbereich verlaufende indirekte Streulichtpfad mittels eines, innerhalb einer der Ausnehmungen der Prüfbereichsumwandung und im Sichtfeld des Lichtempfängers angeordneten Lichtwellenleiters ausgebildet.

Erfindungsgemäß mündet der den Lichtstrahl des Lichtsenders umlenkende Lichtwellenleiter innerhalb einer der Ausnehmungen der Prüfbereichsumwandung bzw. wird der Lichtwellenleiter von einer Ausnehmung aufgenommen. Alternativ durchsetzt der Lichtwellenleiter die Ausnehmung und mündet in den Prüfbereich. Optional kann der Lichtempfänger zur Ausbildung eines direkten Streulichtpfads einer innerhalb einer Ausnehmung befindlichen Linse oder einem Lichtdurchlass, bspw. einem innerhalb der Prüfbereichsumwandung ausgebildeten Spalt, zugeordnet sein, sodass ausschließlich das in dem Überwachungsraum bzw. in der zu überwachenden Umgebung vorliegende Medium und/oder Prüffluid, im Regelfall Luft, innerhalb des Streulichtpfads angeordnet ist. Vorzugsweise sind somit die Leiterplatte, die mit dieser verbundenen aktiven optischen Bauteile und insbesondere auch alle passiven optischen Bauteile außerhalb des Prüfbereichs angeordnet und sind innerhalb entsprechender Ausnehmungen aufgenommen, sodass die optischen Bauteile bündig mit der Prüfbereichsumwandung abschließen. Hierdurch kann eine besonders geringe Verschmutzung des Prüfbereichs durch Partikelablagerungen an optischen Bauteilen und/oder an der Prüfbereichsumwandung und somit eine besonders lange Lebenszeit des Streulichtdetektors sichergestellt werden.

Ist die Prüfbereichsumwandung mit einem kreiszylindrischen Querschnitt ausgebildet, kann zudem eine möglichst verwirbelungsarme, im Idealfall sogar laminare Strömung innerhalb des Prüfbereichs ausgebildet sein. Darüber hinaus wird die Verwendung in einem Ansaugbranderkennungssystem erheblich vereinfacht. In einer besonders bevorzugten Ausführungsvariante ist es daher denkbar, einen Leitungsabschnitt des Rohr- und/oder Schlauchsystems des Ansaugbranderkennungssystems selbst als Prüfbereichsumwandung einzusetzen. Durch die variablen Anordnungs- und Ausrichtmöglichkeiten des Lichtempfängers lässt sich der Streulichtdetektor an die geometrischen Vorgaben des Ansaugbranderkennungssystems anpassen. Indem eine einzige Leiterplatte zur Aufnahme aller aktiven optischen Bauteile sowie ggf. aller weiteren Bauteile zur Ansteuerung und Auswertung verwendet wird, kann außerdem ein die Prüfbereichsumwandung und die außerhalb der Prüfbereichsumwandung angeordnete Leiterplatte umgebendes Gehäuse besonders platzsparend ausgeführt und an den geringen zur Verfügung stehenden Installationsraum angepasst werden.

Gemäß einer vorteilhaften Ausführungsvariante zeichnet sich der Streulichtdetektor durch einen oder mehrere zusätzliche Lichtempfänger aus, die als Lichtnebenempfänger mit der Leiterplatte, insbesondere mit der Vorderseite der Leiterplatte verbunden sind.

In Weiterbildung dieser Ausführungsvariante sind auch der eine oder die mehreren Lichtnebenempfänger derart angeordnet, dass ein direkter oder indirekter Streulichtpfad zwischen dem jeweiligen Lichtnebenempfänger und dem Überschneidungsbereich verläuft.

Zusätzlich zu dem Lichtempfänger können somit weitere Lichtnebenempfänger, vorzugsweise zu diesem benachbart, mit der Vorderseite der Leiterplatte verbunden sein. Der eine oder die mehreren Lichtnebenempfänger sind im Wesentlichen identisch mit dem Lichtempfänger, bspw. als Photodiode, ausgebildet und können jeweils wahlweise und/oder bedarfsweise in entsprechenden möglichen Konfigurationen und/oder Ausrichtungen und/oder Anordnungen des Lichtempfängers ausgebildet sein. Insbesondere können der eine oder die mehreren Lichtnebenempfänger mittelbar oder unmittelbar mit der Leiterplatte verbunden sein und ein direkter oder indirekter Streulichtpfad zwischen dem Überschneidungsbereich und dem jeweiligen Lichtnebenempfänger verlaufen. Der eine oder die mehreren Lichtnebenempfänger können bspw. zur Multidetektion, d. h. zur Erfassung von im Überschneidungsbereich in unterschiedlichen Streuwinkeln gestreuten Streulichtanteilen mittels mehrerer Lichtempfänger verwendet werden. Neben der Ausbildung mehrerer, einem jeweiligen Lichtnebenempfänger zugeordneter Streulichtzentren innerhalb des Überschneidungsbereichs ist es besonders zweckmäßig, den einen oder die mehreren Lichtnebenempfänger derart anzuordnen und/oder deren jeweiliges Sichtfeld derart auszurichten, dass diese mit dem Lichtsender ein gemeinsames Streulichtzentrum innerhalb des Überschneidungsbereichs bzw. ein gemeinsames Detektionsvolumen ausbilden. Optional oder alternativ ist es daher denkbar, den einen oder die mehreren Lichtnebenempfänger in einem jeweiligen Detektionswinkel mit der Leiterplatte zu verbinden, um deren jeweiliges Sichtfeld in der notwendigen Empfangsrichtung auf den Überschneidungsbereich auszurichten, insbesondere um ein gemeinsames Streulichtzentrum innerhalb des Überschneidungsbereichs und somit ein gemeinsames Detektionsvolumen auszubilden. Mittels des Lichtempfängers sowie dem einen oder den mehreren Lichtnebenempfängern können so verschiedene, in dem gemeinsamen Detektionsvolumen in voneinander abweichenden, charakteristischen bzw. partikelspezifischen Streuwinkeln gestreute Streulichtanteile erfasst werden.

Aufgrund der flexiblen Anordnungsmöglichkeiten des Lichtempfängers sowie des einen oder der mehreren Lichtnebenempfänger können diese sogar platzsparend auf einer gemeinsamen Leiterplatte angeordnet sein und gleichzeitig die Auswertungsmöglichkeiten des Streulichtdetektors erhöhen. Insbesondere kann die streuwinkelabhängige Streulichtverteilung in die Auswertung einbezogen werden, wodurch z.B. Brand- von Täuschungsgrößen (z.B. Staub- oder Dampfpartikel) unterschieden werden.

Ergänzend können außerdem eine oder mehrere zweite planare Optiken zum Fokussieren eines Streulichtanteils in einem jeweiligen Streulichtpfad zwischen dem einen oder den mehreren Lichtnebenempfängern und dem Überschneidungsbereich, angeordnet sein.

Vorzugsweise sind die eine oder die mehreren zweiten planaren Optiken jeweils parallel oder in einem Winkel zu der Vorderseite der Leiterplatte ausgerichtet und/oder gegenüberliegend zu dem zugeordneten Lichtnebenempfänger angeordnet und insbesondere innerhalb von Ausnehmungen einer den Prüfbereich umgebenden Prüfbereichsumwandung aufgenommen.

In einer Weiterbildung der Ausführungsvariante ist es dann besonders vorteilhaft, dass die eine oder die mehreren zweiten planaren Optiken jeweils tangential zu einem gemeinsamen den Strömungspfad umgebenden Umkreis angeordnet sind und/oder jeweils denselben Abstand zum Überschneidungsbereich aufweisen.

Beispielsweise können bei Verwendung einer Prüfbereichsumwandung mit kreiszylindrischem Querschnitt mehrere zweite planare Optiken, insbesondere Sammellinsen, von Ausnehmungen der Prüfbereichsumwandung aufgenommen sein, welche entlang eines gemeinsamen Kreisumfangs verlaufen. Die vorzugsweise als Sammel- oder Fresnellinsen ausgebildeten planaren Optiken weisen in dieser Anordnung jeweils denselben Abstand zu dem zweckmäßigerweise entlang einer Mittelachse der Prüfbereichsumwandung verlaufenden Strömungspfad des Prüffluids bzw. zu dem Überschneidungsbereich des Lichtstrahls des Lichtsenders mit dem Strömungspfad auf. Hierdurch wird eine Fokussierung der jeweiligen Empfangsrichtung der Lichtnebenempfänger innerhalb eines gemeinsamen Detektionsvolumens vereinfacht und gleichzeitig die Weite des jeweiligen Sichtfelds erhöht.

Schließlich kann, gemäß einer vorteilhaften Ausführungsform, innerhalb des jeweiligen direkten oder indirekten Streulichtpfads zweier oder mehr der Lichtnebenempfänger oder des Lichtempfängers und mindestens eines der Lichtnebenempfänger jeweils mindestens ein Polarisationsfilter angeordnet sein.

Vorzugsweise stehen die Polarisationsebenen der Polarisationsfilter orthogonal zueinander, wodurch zusätzliche Analyseinformationen anhand des jeweils gefiltert erfassten Streulichtanteils gewonnen werden können.

Ein erfindungsgemäßes Ansaugbranderkennungssystem der eingangs näher bezeichneten Art mit einem Streulichtdetektor nach einer der zuvor beschriebenen Ausführungsformen kennzeichnet sich dadurch, dass ein Prüfbereich des Streulichtdetektors als integrierter Bestandteil des Rohr- und/oder Schlauchsystems ausgebildet ist, indem der Prüfbereich als ein Strömungsabschnitt, insbesondere eines Zuleitungsrohrs, des Rohr- und/oder Schlauchsystems ausgebildet ist.

Erfindungsgemäß ist es also ebenfalls vorgesehen, ein Ansaugbranderkennungssystem mit einem integrierten Streulichtdetektor bereitzustellen. Der Streulichtdetektor ist dabei als integrierter, vorzugsweise sogar als integraler, Bestandteil des Rohr- und/oder Schlauchsystems ausgeführt. Bei der integrierten Ausführung ist der Streulichtdetektor in das Rohr- und/oder Schlauchsystem derart eingebaut, dass die Strömung durch einen Einlass des Detektors in den Prüfbereich gelangt und diesen durch einen Auslass des Detektors wieder verlässt. Bei der integralen Ausführung bildet die Rohr- und/oder Schlauchwandung sogar zugleich die Prüfbereichsumwandung, sodass der Prüfbereich beispielsweise als sogenanntes Rohrfitting in das Rohr- und/oder Schlauchsystem eingefügt werden kann. Auf diese Weise lassen sich auch bereits bestehende Ansaugbranderkennungssysteme einfach und unkompliziert mit dem erfindungsgemäßen Streulichtdetektor nachrüsten.

Eine vorteilhafte Ausgestaltung des Ansaugbranderkennungssystems zeichnet sich dadurch aus, dass eine den Prüfbereich begrenzende Prüfbereichsumwandung in Strömungsrichtung des Prüffluids vor, insbesondere unmittelbar vor der Ansaugeinrichtung angeordnet ist.

Zweckmäßigerweise ist der Streulichtdetektor innerhalb des Rohr- und/oder Schlauchsystems des Ansaugbranderkennungssystems vor, insbesondere unmittelbar vor dessen Ansaugeinrichtung angeordnet. Zum einen kann derart ein möglichst langer, gerader Strömungsverlauf des Prüffluids innerhalb des Rohr- und/oder Schlauchsystems genutzt werden, wodurch eine gleichmäßigere Verteilung der Partikel innerhalb des Prüffluids bzw. eine verwirbelungsärmere Strömung des Prüffluids erzielbar ist. Andererseits können aus verschiedenen Zweigen des Rohr- und/oder Schlauchsystems stammende, einem jeweiligen Überwachungsraum entnommene, Prüffluidmengen mittels desselben Streulichtdetektors überprüft und ausgewertet werden. Zur Herkunftsbestimmung bzw. Lokalisierung der unterschiedlichen Prüffluidmengen ist der Einsatz zusätzlicher dezentral angeordneter Streulichtdetektoren innerhalb, insbesondere in verschiedenen Zweigen des Rohr- und/oder Schlauchsystems sinnvoll. Bevorzugt sind diese dezentralen Streulichtdetektoren ebenfalls nach zumindest einer Ausführungsform der vorliegenden Erfindung ausgeführt.

Bei einem erfindungsgemäßen Verfahren zur Detektion von in einem Prüffluid enthaltenen Partikeln, insbesondere Rauchpartikeln unter Verwendung eines Streulichtdetektors, insbesondere nach einer der zuvor beschriebenen Ausführungsformen, welcher Streulichtdetektor einen Lichtsender zur Ausbildung eines Überschneidungsbereichs und einen Lichtempfänger zur Detektion von innerhalb des Überschneidungsbereichs gestreutem Streulicht aufweist, wird ein Prüffluid mittels einer oder mehrerer Ansaugöffnungen kontinuierlich aus einem oder mehreren Überwachungsräumen entnommen und mittels eines fluidleitenden Rohr- und/oder Schlauchsystems dem Streulichtdetektor zugeführt.

Das erfindungsgemäße Verfahren kennzeichnet sich dadurch, dass der Überschneidungsbereich innerhalb des Rohr- und/oder Schlauchsystems ausgebildet wird und der Lichtempfänger zur Ausbildung eines Detektionsvolumens auf den Überschneidungsbereich gerichtet ist, wobei ein das Prüffluid führender Strömungspfad entlang eines Strömungsabschnitts des Rohr- und/oder Schlauchsystems erzeugt wird und der Lichtsender einen Lichtstrahl in einer auf den Strömungspfad oder entlang des Strömungspfads gerichteten Ausstrahlrichtung sendet, wobei der gesendete Lichtstrahl den Überschneidungsbereich mit dem Strömungspfad ausbildet. Optional empfängt der Lichtempfänger zumindest einen Streulichtanteil des innerhalb des Überschneidungsbereichs gestreuten Streulichts, sofern Partikel innerhalb des Prüffluids vorhanden sind.

Im Rahmen der Erfindung ist also vorgesehen, den Überschneidungsbereich innerhalb des Rohr-und/oder Schlauchsystems auszubilden, indem sowohl der von dem Lichtsender gesendete Lichtstrahl als auch der das Prüffluid führende Strömungspfad innerhalb eines Strömungsabschnitts des Rohr- und/oder Schlauchsystems aufeinandertreffen. Der Strömungsabschnitt kann hierzu in das Rohr- und/oder Schlauchsystem integriert sein, d.h., dass ein von einer, vorzugsweise kreiszylindrischen, Prüfbereichsumwandung umgebener Prüfbereich einen Strömungsabschnitt des Rohr- und/oder Schlauchsystems ersetzt oder zusätzlich zwischengeschaltet wird oder integral mit dem Rohr- und/oder Schlauchsystem ausgebildet sein, d.h., dass ein Strömungsabschnitt des Rohr-und/oder Schlauchsystems selbst als Prüfbereich innerhalb dessen der Strömungspfad ausgebildet ist, verwendet wird. Zur Erfassung von zumindest einem Streulichtanteil des innerhalb des Überschneidungsbereichs gestreuten Streulichts wird auch der Lichtempfänger, insbesondere dessen Sichtfeld auf den Überschneidungsbereich gerichtet, wobei ein Streulichtzentrum, insbesondere Detektionsvolumen, innerhalb des Rohr- und/oder Schlauchsystems ausgebildet wird. Ein zwischen dem Überschneidungsbereich und dem Lichtempfänger verlaufender Streulichtpfad kann hierbei wahlweise und/oder bedarfsweise direkt oder indirekt ausgebildet werden.

Weitere Schritte zur Auswertung des erfassten Streulichtanteils auf das Vorliegen eines Brands oder einer Brandgefahr oder der Gefahr einer Brandentstehung sind hinreichend aus dem Stand der Technik bekannt.

Es ist darauf hinzuweisen, dass die in der vorangegangenen und nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Weitere vorteilhafte Ausgestaltungen der Erfindung sind in der folgenden Figurenbeschreibung offenbart. Es zeigen
- Figur 1: eine beispielhafte, schematische Darstellung eines erfindungsgemäßen Ansaugbranderkennungssystems mit einem integrierten Streulichtdetektor,
- Figur 2: eine schematische Darstellung einer ersten beispielhaften Ausführungsform eines erfindungsgemäßen Streulichtdetektors mit einem entlang eines Strömungspfads gesendeten Lichtstrahl und einem direkten Streulichtpfad,
- Figur 3: eine schematische Darstellung einer zweiten beispielhaften Ausführungsform eines erfindungsgemäßen Streulichtdetektors mit einem entlang eines Strömungspfads gesendeten Lichtstrahl und einer kreiszylindrischen Prüfbereichsumwandung,
- Figur 4: eine schematische Darstellung einer dritten beispielhaften Ausführungsform eines erfindungsgemäßen Streulichtdetektors mit einem auf den Strömungspfad gerichteten Lichtstrahl und einem direkten Streulichtpfad,
- Figur 5: eine schematische Darstellung einer vierten beispielhaften Ausführungsform eines erfindungsgemäßen Streulichtdetektors mit einem auf den Strömungspfad gerichteten und fokussierten Lichtstrahl und einem direkten und fokussierten Streulichtpfad,
- Figur 6: eine schematische Darstellung einer fünften beispielhaften Ausführungsform eines erfindungsgemäßen Streulichtdetektors mit einem auf den Strömungspfad gerichteten und fokussierten Lichtstrahl und einem indirekten und fokussierten Streulichtpfad,
- Figur 7: eine schematische Darstellung einer sechsten beispielhaften Ausführungsform eines erfindungsgemäßen Streulichtdetektors mit einem auf den Strömungspfad gerichteten und fokussierten Lichtstrahl und mehreren Lichtnebenempfängern, welche für eine Multidetektion in einem jeweiligen Detektionswinkel ausgerichtet sind,
- Figur 8: eine schematische Darstellung einer siebten beispielhaften Ausführungsform eines erfindungsgemäßen Streulichtdetektors mit mehreren Lichtnebenempfängern, welche für eine Multidetektion in einem jeweiligen Detektionswinkel ausgerichtet sind, wobei ein Polarisationsfilter in einem jeweiligen direkten Streulichtpfad angeordnet ist,
- Figur 9: eine schematische Darstellung einer achten beispielhaften Ausführungsform eines erfindungsgemäßen Streulichtdetektors mit mehreren Lichtnebenempfängern, welche für eine Multidetektion in einem jeweiligen Detektionswinkel ausgerichtet sind und ein jeweiliger indirekter Streulichtpfad mittels je eines Lichtwellenleiters ausgebildet ist und
- Figur 10: ein beispielhaftes Fließbild eines erfindungsgemäßen Verfahrens.

In den unterschiedlichen Figuren sind gleiche Teile stets mit denselben Bezugszeichen versehen, weswegen diese in der Regel auch nur einmal beschrieben werden.

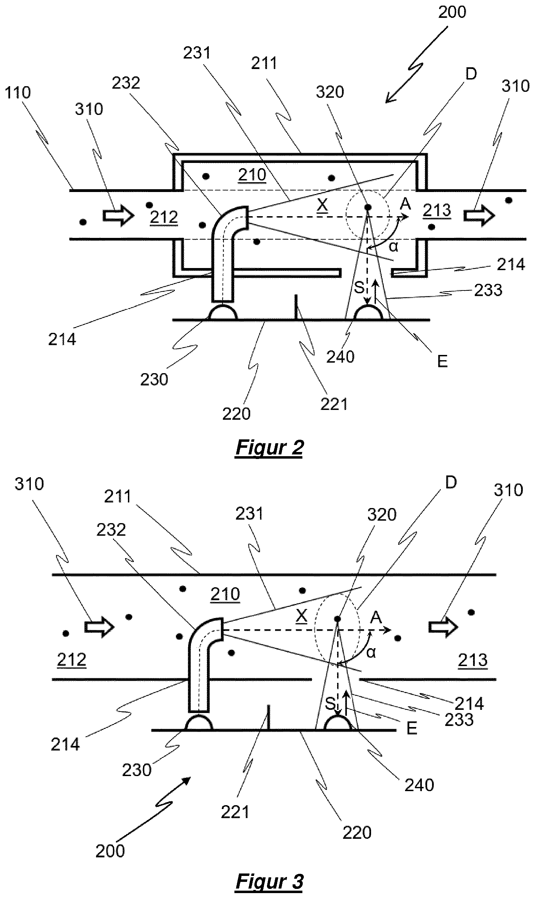

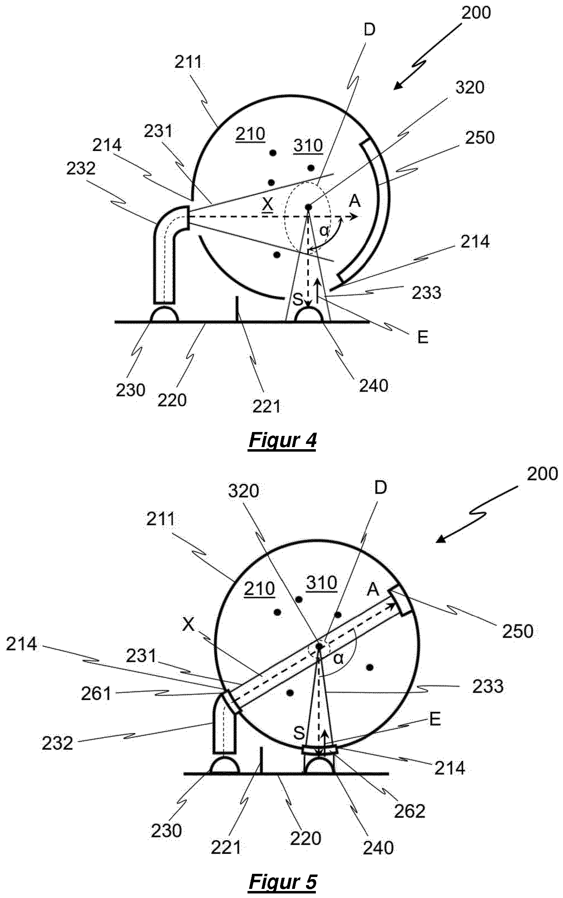

Während die Blickrichtung des Betrachters bei den Figuren 2 und 3 orthogonal zum Strömungsverlauf des Prüffluids ist, sind die Figuren 4 bis 9 als Ansichten *in* Strömungsrichtung des Prüffluids gestaltet.

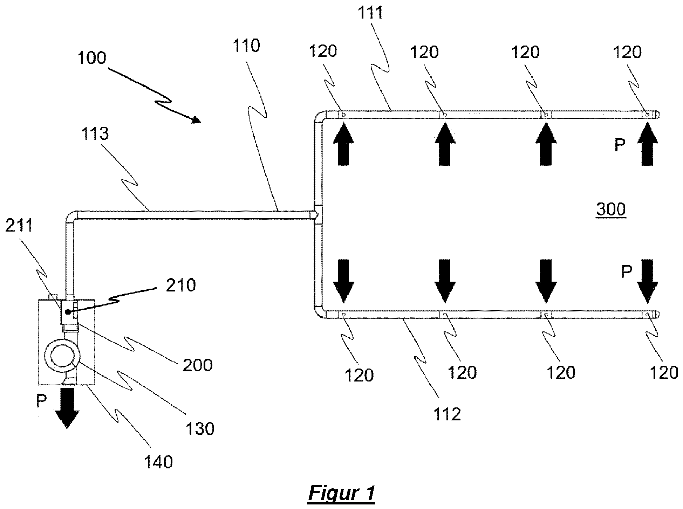

In der Figur 1 ist eine beispielhafte, schematische Darstellung eines erfindungsgemäßen Ansaugbranderkennungssystems 100 mit einem integrierten Streulichtdetektor 200 dargestellt. Das Ansaugbranderkennungssystem 100 weist ein Rohr- und/oder Schlauchsystem 110 mit einem ersten Rohrzweig 111 und einem zweiten Rohrzweig 112 auf. Die Rohrzweige 111, 112 umfassen jeweils mehrere Ansaugöffnungen 120, die zum Ansaugen eines Prüffluids in einem oder mehreren Überwachungsräumen 300 angeordnet sind. Beispielsweise ist es denkbar, dass der erste Rohrzweig 111 und der zweite Rohrzweig 112 in unterschiedlichen, baulich getrennten Überwachungsräumen 300 angeordnet sind, wobei jedem Überwachungsraum 300 mehrere Ansaugöffnungen 120 zugeordnet sind. Das Rohr- und/oder Schlauchsystem 110 weist außerdem ein Zuleitungsrohr 113 zur fluidleitenden Verbindung der Ansaugöffnungen 120 sowie der Rohrzweige 111, 112 mit dem Streulichtdetektor 200 auf. Um einen Unterdruck und/oder eine Strömung innerhalb des Rohr- und/oder Schlauchsystems 110 zu erzeugen, ist eine Ansaugeinrichtung 130 vorgesehen. Mittels der Ansaugeinrichtung 130 kann über die Ansaugöffnungen 120 jeweils eine Prüffluidmenge aus dem einen oder den mehreren Überwachungsräumen 300 entnommen werden und in einer Strömungsrichtung P des Prüffluids, welche anhand der Pfeile verdeutlicht ist, über das Rohr- und/oder Schlauchsystem 110 dem Streulichtdetektor 200 zugeführt werden. Der Streulichtdetektor 200 ist hier als integrierter Bestandteil des Rohr- und/oder Schlauchsystems 110 ausgeführt, indem dessen Prüfbereich 210, welcher von einer Prüfbereichsumwandung 211 begrenzt wird, einen Strömungsabschnitt und/oder Leitungsabschnitt, insbesondere des Zuleitungsrohrs 113 des Rohr- und/oder Schlauchsystems 110 ersetzt und in Strömungsrichtung P des Prüffluids unmittelbar vor der Ansaugeinrichtung 130 angeordnet ist. Der Streulichtdetektor 200 und die Ansaugeinrichtung 130 sind von einem gemeinsamen Gehäuse 140 eingefasst.

Eine schematische Darstellung einer ersten beispielhaften Ausführungsform eines erfindungsgemäßen Streulichtdetektors 200 kann der Figur 2 entnommen werden. Der Streulichtdetektor 200 weist einen Prüfbereich 210 auf, welcher von einer rohrförmig bzw. zylindrisch ausgebildeten Prüfbereichsumwandung 211 begrenzt ist. Zur Ausbildung eines von einem Prüffluid durchströmbaren, anhand von Pfeilen angedeuteten Strömungspfads 310, weist der Prüfbereich 210 ferner einen Strömungseinlass 212 und einen Strömungsauslass 213 auf. Der mittels gestrichelter Linien dargestellte Querschnitt des innerhalb des Prüfbereichs 210 ausgebildeten Strömungspfads 310 entspricht in etwa dem Querschnitt des Strömungseinlasses 212 sowie des Strömungsauslasses 213 oder wird durch diese ausgebildet. Der Strömungseinlass 212 ist mit einem Rohr- und/oder Schlauchsystem 110 eines Ansaugbranderkennungssystems 100 verbindbar, der Strömungsauslass 213 kann unmittelbar vor einer Ansaugeinrichtung 130 des Ansaugbranderkennungssystems 100 angeordnet sein (siehe Figur 1) oder mit dem Rohr- und/oder Schlauchsystem 110 verbunden sein. Ein Lichtsender 230, insbesondere eine Leuchtdiode und ein Lichtempfänger 240, insbesondere eine Photodiode, sind jeweils unmittelbar bzw. direkt mit der Vorderseite einer Leiterplatte 220 verbunden und durch eine lichtundurchlässige Trenneinrichtung 221 optisch voneinander getrennt. Die Leiterplatte 220 sowie die mit dieser verbundenen aktiven optischen Bauteile, der Lichtsender 230 und der Lichtempfänger 240, sind sowohl außerhalb des Prüfbereichs 210 als auch außerhalb der Prüfbereichsumwandung 211 angeordnet. Hierdurch können unvorhersehbare Strömungsverwirbelungen und Partikelablagerungen, die zu einem Verschmutzen des Prüfbereichs 210 und somit zu einer kürzeren Lebensdauer des Streulichtdetektors 200 führen, vermieden werden. Um eine optische Verbindung zwischen dem Lichtsender 230 und dem Lichtempfänger 240 mit dem Prüfbereich 210 herzustellen, umfasst die Prüfbereichsumwandung 211 zwei Ausnehmungen 214. Der Lichtsender 230 und der Lichtempfänger 240 weisen orthogonal von der Leiterplatte 220 weg und sind in Richtung des Prüfbereichs 210 gerichtet. Ein von dem Lichtsender 230 zunächst orthogonal zur Vorderseite der Leiterplatte 220 gesendeter Lichtstrahl 231 wird mittels eines Lichtwellenleiters 232 umgelenkt, um in einer entlang des Strömungspfads 310 gerichteten Ausstrahlrichtung A zu verlaufen. Der dem Lichtsender 230 zugeordnete Lichtwellenleiter 232 ist hierzu eine Ausnehmung 214 der Prüfbereichsumwandung 211 durchsetzend angeordnet und lenkt den Lichtstrahl 231 in einer Ausstrahlrichtung A, hier parallel zur Vorderseite der Leiterplatte 220, um. Ein erstes Schnittvolumen, welches durch den Lichtstrahl 231 und den Strömungspfad 310 gebildet wird, ist als Überschneidungsbereich X gekennzeichnet.

Auch der Lichtempfänger 240 ist mit seinem Sichtfeld in einer orthogonal zur Vorderseite der Leiterplatte 220 verlaufenden Empfangsrichtung E auf den Prüfbereich 210 gerichtet, wobei der Lichtstrahl 231 des Lichtsenders 230 und das Sichtfeld des Lichtempfängers 240 ein zweites Schnittvolumen, ein sogenanntes Streulichtzentrum ausbilden. Zur Streulichterfassung ist das Streulichtzentrum innerhalb des Strömungspfads 310 platziert, wodurch ein drittes Schnittvolumen, ein Detektionsvolumen D, in welchem der Lichtstrahl 231 des Lichtsenders 230, das Sichtfeld des Lichtempfängers 240 und der Strömungspfad 310 des Prüffluids einander überschneiden, festgelegt wird. Ein innerhalb des Detektionsvolumens D gestreuter Streulichtanteil 233 ist durch den Lichtempfänger 240 erfassbar.

Bei einer Rauchentstehung sind innerhalb des Überschneidungsbereichs X Rauchpartikel 320 enthalten, welche aus einem oder mehreren Überwachungsräumen 300 angesaugt werden. Ein Teil des auf ein Rauchpartikel 320 treffenden Lichtstrahls 231 wird in mehrere Richtungen, unter anderem in einem Streuwinkel α gestreut. Der beispielhaft dargestellte Streuwinkel α beträgt vorliegend in etwa 90°, womit die Streuung gerade noch in den Bereich der sogenannten Vorwärtsstreuung (α=0°-90)° fällt. Zwischen dem Überschneidungsbereich X und dem Lichtempfänger 240 ist ein direkter Streulichtpfad S, d.h. ein gerader, nicht reflektierter und nicht umgelenkter Verlauf eines im Überschneidungsbereich X an einem Rauchpartikel 320 gestreuten Streulichtanteils 233 ausgebildet, welcher durch eine als Lichtdurchlass bzw. Spalt ausgebildete Ausnehmung 214 der Prüfbereichsumwandung 211 verläuft und auf den Lichtempfänger 240 trifft. Zur optimierten Erfassung des gestreuten Streulichtanteils 233 ist die Empfangsrichtung E des Lichtempfängers 240 dem Streulichtpfad S entgegen gerichtet.

Aus der Figur 3 kann eine schematische Darstellung einer zweiten beispielhaften Ausführungsform eines erfindungsgemäßen Streulichtdetektors 200 entnommen werden. Von der ersten Ausführungsform (s. Figur 2) unterscheidet sich die zweite Ausführungsform des Streulichtdetektors 200 durch eine den Prüfbereich 210 rohr- bzw. zylinderförmig begrenzende Prüfbereichsumwandung 211 mit einer kreiszylindrischen Querschnittsfläche, deren Durchmesser dem Durchmesser des Rohr- und/oder Schlauchsystems 110 entspricht. Um die Prüfbereichsumwandung 211 als integralen Bestandteil eines Ansaugbranderkennungssystems 100 auszubilden, ist es vorteilhaft, den Durchmesser der kreiszylindrischen Querschnittsfläche an den Durchmesser des Rohr- und/oder Schlauchsystems 110 anzupassen, insbesondere mit einem identischen Innendurchmesser auszubilden. Die Prüfbereichsumwandung 211 kann dann als sogenanntes Rohrfitting einen integralen Bestandteil des Rohr- und/oder Schlauchsystems 100 bilden bzw. kann ein Leitungs- oder Strömungsabschnitt des Rohr- und/oder Schlauchsystems 110, insbesondere des Zuleitungsrohrs 113 als Prüfbereichsumwandung 211 für den Streulichtdetektor 200 verwendet werden. Der Strömungseinlass 212 und der Strömungsauslass 213 schließen in dieser Ausführungsform unmittelbar bündig mit benachbarten Leitungen des Rohr- und/oder Schlauchsystems 110 des Ansaugbranderkennungssystems 100 ab. Dies hat zur Folge, dass der Strömungspfad 310 im Wesentlichen innerhalb des gesamten Prüfbereichs 210 verlaufend ausgebildet ist. Aufgrund der zylindrischen Geometrie der Prüfbereichsumwandung 211 können Ecken und/oder Strömungstoträume, innerhalb derer es leicht zu Verschmutzungen durch Partikelablagerungen kommen kann, vermieden werden. Zudem ist der Strömungspfad 310 vorzugsweise innerhalb des gesamten Prüfbereichs 210 ausgebildet, wodurch alle innerhalb des Prüffluids enthaltenen Partikel 320 von der Strömung erfasst sind und so einfacher über den Strömungsauslass 213 aus dem Prüfbereich 210 abtransportiert werden.

Eine dritte beispielhafte Ausführungsform eines erfindungsgemäßen Streulichtdetektors 200 ist in der Figur 4 schematisch dargestellt. Auch die dritte Ausführungsform des Streulichtdetektors 200 weist eine Prüfbereichsumwandung 211 mit einer kreiszylindrischen Querschnittsfläche auf, welche entweder in ein Rohr- und/oder Schlauchsystem 110 eines Ansaugbranderkennungssystems 100 integrierbar ist (s. Figur 1) oder sogar als integraler Bestandteil des Rohr- und/oder Schlauchsystems 110 (s. Figur 3) ausgebildet sein kann. Ein Strömungspfad 310 ist innerhalb des Prüfbereichs 210 ausgebildet und verläuft entlang der Mittelachse der zylindrischen bzw. einen kreiszylindrischen Querschnitt aufweisenden Prüfbereichsumwandung 211. Anders als bei der zweiten Ausführungsform (s. Figur 3) ist der von dem Lichtsender 230 gesendete Lichtstrahl 231 hier auf den Strömungspfad 310 gerichtet und verläuft in einer Ausstrahlrichtung A im Wesentlichen radial bzw. orthogonal zum Strömungspfad 310. In dieser Konfiguration ist es möglich, nicht nur die den Lichtempfänger 240 und den Lichtsender 230 aufweisende Leiterplatte 220, sondern zusätzlich den Lichtwellenleiter 232, welcher den von dem Lichtsender 230 gesendeten Lichtstrahl 231 umlenkt, außerhalb des Prüfbereichs 210 und außerhalb der Prüfbereichsumwandung 211 anzuordnen. Hierdurch befinden sich alle optischen Bauteile, aktive wie auch passive, außerhalb des Prüfbereichs 210, wodurch eine störungsfreie, verwirbelungsarme Prüffluidströmung entlang des Strömungspfads 310 ermöglicht wird. Dies trägt zu einer verbesserten Erfassung des gestreuten Streulichts sowie aufgrund einer geringeren Verschmutzung zu einer längeren Lebenszeit des Streulichtdetektors 200 bei. Zweckmäßigerweise kann innerhalb des Prüfbereichs 210 zusätzlich eine Lichtfalle 250 zur Absorption eines nicht gestreuten Lichtanteils des von dem Lichtsender 230 gesendeten Lichtstrahls 231 angeordnet sein. Vorzugsweise ist die Lichtfalle 250 als vollständige oder teilweise Beschichtung der Innenfläche der Prüfbereichsumwandung 211 ausgeführt, könnte aber alternativ auch als optisches Bauteil innerhalb des Prüfbereichs 210 angeordnet sein.

In der Figur 5 ist eine schematische Darstellung einer vierten beispielhaften Ausführungsform eines erfindungsgemäßen Streulichtdetektors 200 gezeigt. Gegenüber der dritten Ausführungsform (s. Figur 4) unterscheidet sich der hier dargestellte Streulichtdetektor 200 zum einen dadurch, dass der von dem Lichtsender 230 gesendete und radial auf den Strömungspfad 310 gerichtete Lichtstrahl 231 mittels einer ersten planaren Optik 261, insbesondere einer Sammellinse oder Fresnel-Linse, fokussiert ist. Die erste planare Optik 261 ist hierzu innerhalb einer Ausnehmung 214 der Prüfbereichsumwandung 211 angeordnet und schließt sich an den Lichtwellenleiter 232, welcher den von dem Lichtsender 230 gesendeten Lichtstrahl 231 umlenkt, an. Wie dargestellt wird die Weite des Lichtstrahls 231 durch die erste planare Optik 261 reduziert und der Lichtstrahl 231 selbst parallelisiert. Entsprechend ergibt sich ein gegenüber einem nicht fokussierten Lichtstrahl verkleinerter Überschneidungsbereich X zwischen dem Strömungspfad 310 des Prüffluids und dem Lichtstrahl 231, wodurch eine präzisere Detektion des gestreuten Streulichts möglich ist. Zusätzlich kann eine optionale Lichtfalle 250 mit einer entsprechend geringeren Größe ausgebildet sein. Die erste planare Optik 261 könnte auch als einfaches Fensterglas ausgeführt sein, um lediglich die Öffnung 214 zu verschließen, sodass das Prüffluid nicht durch die Ausnehmung 214 austreten kann.

Zum anderen ist auch der direkte Streulichtpfad S, welcher zwischen dem Überschneidungsbereich X bzw. dem Detektionsvolumen D und dem Lichtempfänger 240 verläuft, mittels einer zweiten planaren Optik 262, insbesondere einer Sammellinse oder Fresnel-Linse, fokussiert. Der auf die zweite planare Optik 262 einfallende Streulichtanteil 233 wird gebündelt und auf den Lichtempfänger 240 fokussiert. Auf diese Weise ist es möglich, Streulichtanteile, die andernfalls an dem Lichtempfänger 240 vorbei liefen "abzufangen" und zu detektieren. Darüber hinaus verläuft die Ausstrahlrichtung A des Lichtsenders 230 in dieser Ausführungsform nicht parallel zur Vorderseite der Leiterplatte 220, sodass der hier beispielhaft dargestellte Streuwinkel α, in welchem der von dem Lichtsender 230 gesendete Lichtstrahl 231 an einem Partikel 320 gestreut wird größer 90° ist, weshalb vorliegend von einer sogenannten Rückwärtsstreuung (α>90°) gesprochen werden kann. Auch hier ist es grundsätzlich denkbar, dass die zweite planare Optik 262 alternativ als einfaches Fensterglas ausgebildet ist.

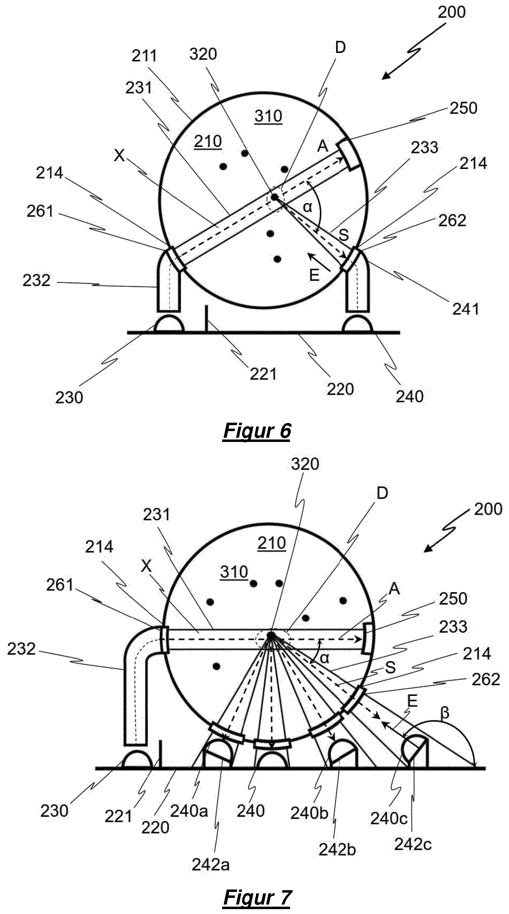

Eine schematische Darstellung einer fünften beispielhaften Ausführungsform eines erfindungsgemäßen Streulichtdetektors 200 mit einem indirekten und fokussierten Streulichtpfad S kann der Figur 6 entnommen werden. Von der zuvor beschriebenen, vierten Ausführungsform (s. Figur 5) weicht die vorliegende, fünfte Ausführungsform wiederum durch den Streuwinkel α ab. Gemäß der Darstellung wird der von dem Lichtsender 230 gesendete Lichtstrahl 231 an einem Partikel 320 in einem Streuwinkel α kleiner 90° gestreut, sodass die vorliegende Streuung im Bereich der Vorwärtsstreuung einzuordnen ist. Der in dem Streuwinkel α gestreute Streulichtanteil 233 verläuft entlang eines indirekten Streulichtpfads S, d.h. der entlang des Streulichtpfads S verlaufende Streulichtanteil 233 wird mittels eines dem Lichtempfänger 240 zugeordneten und in dessen Sichtfeld angeordneten Lichtwellenleiters 241 umgelenkt, sodass dieser einen "gekrümmten" Verlauf aufweist. Vorteilhafterweise kann derart die zur Erfassung von einem vorwärts, in einem Winkel zwischen 0° und 90°, gestreuten Streulichtanteil 233 notwendige Fläche der Leiterplatte 220 verringert werden. Durch die Umlenkung des Streulichtanteils 233 mittels des dem Lichtempfänger 240 zugeordneten Lichtwellenleiters 241 wird der zwischen dem Lichtsender 230 und dem Lichtempfänger 240 benötigte Abstand auf der Leiterplatte 220 verringert, wodurch diese insgesamt kleiner ausfällt und somit weniger Platz benötigt. Insbesondere ist es durch die Umlenkung mittels des Lichtwellenleiters 241 überhaupt erst möglich, Vorwärtsstreuung über einen Streulichtdetektor 200 mit einer einzigen Leiterplatte 220, deren Vorderseite sowohl den Lichtsender 230 als auch den Lichtempfänger 240 aufweist, zu erfassen. Zur Fokussierung ist innerhalb des Streulichtpfads S eine zweite planare Optik 262 vorgesehen, welche in einer Ausnehmung 214 der Prüfbereichsumwandung 211 und bzgl. der Richtung des Streulichtpfads S vor dem Lichtwellenleiter 241 angeordnet ist.

In der Figur 7 ist eine schematische Darstellung einer sechsten beispielhaften Ausführungsform eines erfindungsgemäßen Streulichtdetektors 200, welcher für eine Multidetektion vorgesehen ist, gezeigt. Ähnlich der fünften Ausführungsform (s. Figur 6) ist ein von dem Lichtsender 230 gesendeter Lichtstrahl 231 mittels eines Lichtwellenleiters 232 umgelenkt und auf den innerhalb des Prüfbereichs 210 verlaufenden Strömungspfad 310 gerichtet, wobei der Lichtstrahl 231 mittels einer ersten planaren Optik 261 fokussiert wird. Wie in der Abbildung gezeigt, wird der Lichtstrahl 231, anders als bei der fünften Ausführungsform (s. Figur 6), um einen Winkel von etwa 90° umgelenkt, sodass der Lichtstrahl 231 im Wesentlichen parallel zur Vorderseite der Leiterplatte 220 verläuft. Gemeinsam mit dem Strömungspfad 310 bildet der Lichtstrahl 231 den Überschneidungsbereich X aus. Zusätzlich zu dem Lichtsender 230 und dem Lichtempfänger 240, welche jeweils unmittelbar, d.h. direkt mit der Vorderseite der Leiterplatte 220 verbunden sind, sind weitere Lichtnebenempfänger 240a, 240b, 240c in dieser Figur jeweils mittelbar, d.h. über zusätzliche Unterbauten oder oberflächenmontierte Bauteile 242a, 242b, 242c, ebenfalls mit der Vorderseite der Leiterplatte 220 verbunden. Die oberflächenmontierten Bauteile 242a, 242b, 242c sind hier beispielhaft als massiver Tragsockel ausgeführt, deren Tragfläche um einen jeweiligen Detektionswinkel β gegenüber der Vorderseite der Leiterplatte 220 verschwenkt und mit dem jeweils zugeordneten Lichtnebenempfänger 240a, 240b, 240c verbunden ist, sodass die Lichtnebenempfänger 240a, 240b, 240c selbst für eine Multidetektion in einem jeweiligen Detektionswinkel β ausgerichtet sind. Der Detektionswinkel β spannt sich zwischen der Vorderseite der Leiterplatte 220 und der jeweiligen Empfangsrichtung E auf. Alternativ ist es denkbar, dass die Lichtnebenempfänger 240a, 240b, 240c jeweils unmittelbar, d.h. ohne zusätzliche Unterbauten oder oberflächenmontierte Bauteile 242a, 242b, 242c mit der Vorderseite der Leiterplatte 220 verbunden sind. Durch geeignete planare Optiken 262 kann auch bei fehlender Anstellung der Nebenempfänger ein ausreichender Lichteinfall auf die Lichtnebenempfänger 240a, 240b, 240c gewährleistet werden. Während die mittelbare Verbindung und Ausrichtung der Lichtnebenempfänger 240a, 240b, 240c mithilfe von Unterbauten einen etwas höheren Wirkungsgrad beim Lichtempfang erzielen kann, stellt die unmittelbare Verbindung eine fertigungsgünstigere Variante dar.

Die jeweiligen Detektionswinkel β des Lichtempfängers 240 und der Lichtnebenempfänger 240a, 240b, 240c sind entsprechend zur Ausbildung eines gemeinsamen Streulichtzentrums mit dem Lichtstrahl 231 innerhalb des Überschneidungsbereichs X und somit zur Ausbildung eines gemeinsamen Detektionsvolumens D gewählt. Ausgehend von einem innerhalb des Detektionsvolumens D befindlichen Partikel 320 trifft jeweils ein direkter Streulichtpfad S eines in einem zugehörigen Streuwinkel α gestreuten Streulichtanteils 233 auf den Lichtempfänger 240 bzw. auf die Lichtnebenempfänger 240a, 240b, 240c (hier beispielhaft anhand des Lichtnebenempfängers 240c schematisch dargestellt). Mehrere zweite planare Optiken 262, welche innerhalb entsprechender Ausnehmungen 214 angeordnet sind, dienen jeweils der Fokussierung des Streulichtpfads S. Aufgrund der flexiblen Anordnungsmöglichkeiten des Lichtempfängers 240 sowie des einen oder der mehreren Lichtnebenempfänger 240a, 240b, 240c können diese platzsparend auf einer gemeinsamen Leiterplatte 220 angeordnet sein, und gleichzeitig die Auswertungsmöglichkeiten des Streulichtdetektors 200 erhöhen. Insbesondere kann die Streuwinkel α abhängige Streulichtverteilung in die Auswertung einbezogen werden, wodurch z.B. Brand- von Täuschungsgrößen (Staub- oder Dampfpartikel) unterschieden werden.

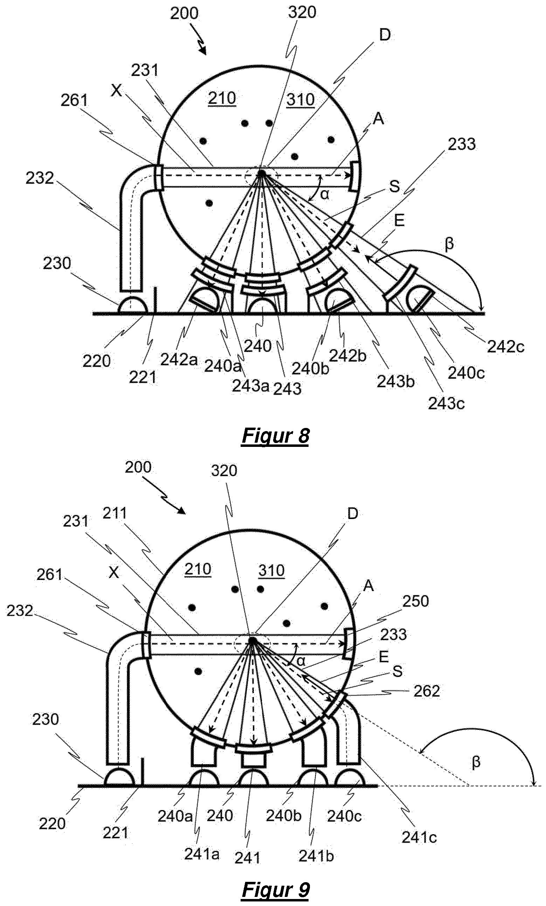

Eine schematische Darstellung einer siebten beispielhaften Ausführungsform eines erfindungsgemäßen Streulichtdetektors 200, welcher für eine Multidetektion vorgesehen ist, kann der Figur 8 entnommen werden. Wie auch gemäß der sechsten Ausführungsform (s. Figur 7) sind der Lichtempfänger 240 und die Lichtnebenempfänger 240a, 240b, 240c in einem jeweiligen Detektionswinkel β zur Ausbildung eines gemeinsamen Detektionsvolumens D ausgerichtet. Die Lichtnebenempfänger 240a, 240b, 240c sind jeweils mittelbar mit der Leiterplatte 220 über ein zugeordnetes oberflächenmontiertes Bauteil 242a, 242b, 242c, hier jedoch als schräggestelltes Blech ausgebildet, verbunden. Zusätzlich sind gemäß der vorliegenden Ausführungsform außerdem Polarisationsfilter 243, 243a, 243b, 243c innerhalb des jeweiligen direkt verlaufenden und fokussierten Streulichtpfads S angeordnet. Vorzugsweise stehen die Polarisationsebenen von jeweils zwei Polarisationsfiltern 243, 243a, 243b, 243c orthogonal zueinander, wodurch zusätzliche Analyseinformationen anhand des jeweils gefiltert erfassten Streulichtanteils 233 gewonnen werden können.

In der Figur 9 ist eine schematische Darstellung einer achten beispielhaften Ausführungsform eines erfindungsgemäßen Streulichtdetektors 200, welcher für eine Multidetektion vorgesehen ist, gezeigt. Anders als bei der zuvor beschriebenen sechsten und siebten Ausführungsform (s. Figur 7, 8) weist hier der jeweilige Streulichtpfad S einen "gekrümmten" Verlauf auf bzw. ist dieser indirekt ausgebildet. Durch die Verwendung eines jeweiligen Lichtwellenleiters 241, 241a, 241b, 241c ist es möglich den Detektionswinkel β durch Umlenkung des jeweiligen Streulichtanteils 233, ohne die Verwendung zusätzlicher oberflächenmontierter Bauteile 242a, 242b, 242c (s. Figuren 7 und 8), zu verändern. Auch die Lichtnebenempfänger 240a, 240b, 240c können somit unmittelbar, d. h. direkt und ohne zusätzliche Unterbauten mit der Vorderseite der Leiterplatte 220 verbunden sein. Zudem ist in dieser Ausführung der zur Erfassung des im zugehörigen Streuwinkel α gestreuten Streulichtanteils 233 jeweils notwendige Abstand der Lichtnebenempfänger 240a, 240b, 240c zu dem Lichtsender 230 geringer, sodass die Leiterplatte 220 zugunsten eines insgesamt kleineren Streulichtdetektors 200 mit einer geringeren Fläche ausgebildet werden kann.

Die unterschiedlichen, beschriebenen Ausführungsformen gemäß der Figuren 2 - 9 stellen lediglich einen beispielhaften Ausschnitt der vielen Modifikationsmöglichkeiten eines erfindungsgemäßen Streulichtdetektors 200 dar. Denkbar sind weitere Ausführungsformen in beliebiger Kombination der vorgeschlagenen Aufbau- und/oder Anordnungs- und/oder Modifikationsmöglichkeiten. Insbesondere ermöglicht ein flexibler Aufbau eine angepasste Verwendung des Streulichtdetektors 200 für ein Ansaugbranderkennungssystem 100, indem der Lichtstrahl 231 des Lichtsenders 230 auf den Strömungspfad 310 des Prüffluids richtbar oder entlang des Strömungspfads des Prüffluids ausrichtbar ist. Durch den Einsatz von Lichtwellenleitern 232, 241, 241a, 241b, 241c kann die Größe der Leiterplatte 220 und somit die Größe des Streulichtdetektors 200 insgesamt verringert werden, sodass eine Multidetektion mit mehreren Lichtnebenempfängern 240a, 240b, 240c vereinfacht bzw. überhaupt erst umsetzbar ist. Durch die Anordnung aller aktiven optischen Bauteile (Lichtsender 230, Lichtempfänger 240, Lichtnebenempfänger 240a, 240b, 240c) auf einer einzigen Leiterplatte 220 werden zusätzliche Herstellungskosten eingespart und der Aufbau des Streulichtdetektors 200 erheblich vereinfacht. Die Möglichkeit sowohl alle aktiven optischen Bauteile (Lichtsender 230, Lichtempfänger 240, Lichtnebenempfänger 240a, 240b, 240c) als auch passiven optischen Bauteile (Lichtwellenleiter 232, 241, 241a, 241b, 241c, planare Optiken 261, 262, Polarisationsfilter 243, 243a, 243b, 243c) außerhalb des Prüfbereichs 210 und außerhalb bzw. bündig mit der Prüfbereichsumwandung 211 anzuordnen, führt zur Vermeidung von Verschmutzungen des Prüfbereichs 210 durch Partikelablagerungen, welche gerade bei Ansaugbranderkennungssystemen 100 verstärkt auftreten, und wird in der Folge die Lebenszeit des Streulichtdetektors 200 erhöht. Durch Modifikationen, wie die Verwendung planarer Optiken 261, 262 oder von Polarisationsfiltern 243, 243a, 243b, 243c, werden die Detektionsgenauigkeit und die Auswertemöglichkeiten verbessert.

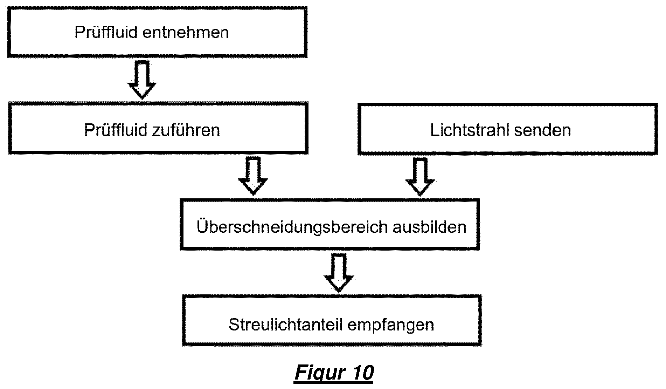

Zur Veranschaulichung eines erfindungsgemäßen Verfahrens zur Detektion von in einem Prüffluid enthaltenen Partikeln 320 unter Verwendung eines Streulichtdetektors 200, vorzugsweise nach einer der zuvor beschriebenen beispielhaften Ausführungsformen, ist der Figur 10 ein beispielhaftes, schematisches Fließbild eines solchen Verfahrens zu entnehmen. Das erfindungsgemäße Verfahren wird vorzugsweise zur ständigen Überwachung eines Überwachungsraums 300 kontinuierlich durchgeführt. Zum einfacheren Verständnis ist der Verfahrensablauf nachfolgend anhand einer einzelnen entnommenen Prüffluidmenge schrittweise erläutert.

Über eine oder mehrere Ansaugöffnungen 120 eines Ansaugbranderkennungssystems 100 wird zunächst eine Prüffluidmenge aus einem oder mehreren Überwachungsräumen 300 entnommen. Durch ein fluidleitendes Rohr- und/oder Schlauchsystem 110 wird die entnommene Prüffluidmenge anschließend dem Streulichtdetektor 200 zugeführt (s. hierzu auch Figur 1). Der Streulichtdetektor 200, genauer dessen Prüfbereich 210, ist hierzu in das Rohr- und/oder Schlauchsystem 110 integriert oder integral mit diesem ausgebildet, sodass ein Strömungspfad 310 entlang eines Strömungsabschnitts des Rohr- und/oder Schlauchsystems 110, welcher dann als Prüfbereich 210 fungiert, erzeugt wird. Im Anschluss wird ein Überschneidungsbereich X innerhalb des Prüfbereichs 210 und folglich innerhalb des Rohr- und/oder Schlauchsystems 110 ausgebildet, indem ein Lichtsender 230 einen Lichtstrahl 231 in einer auf den Strömungspfad 310 oder entlang des Strömungspfads 310 gerichteten Ausstrahlrichtung A sendet. Der Lichtempfänger 240 ist zur Ausbildung eines Detektionsvolumens (D) auf den Überschneidungsbereich (X) gerichtet. Sofern Partikel 320 innerhalb der angesaugten Prüffluidmenge vorhanden sind, wird ein an einem Partikel 320 innerhalb des Detektionsvolumens D gestreuter Streulichtanteil 233 von dem Lichtempfänger 240 empfangen (s. hierzu bspw. auch Figur 2).

Im Rahmen der Erfindung ist also vorgesehen, den Überschneidungsbereich X innerhalb des Rohr- und/oder Schlauchsystems 110 eines Ansaugbranderkennungssystems 100 auszubilden, indem sowohl der von dem Lichtsender 230 gesendete Lichtstrahl 231 als auch der das Prüffluid führende Strömungspfad 310 innerhalb eines Strömungsabschnitts des Rohr- und/oder Schlauchsystems 110 aufeinandertreffen und zugleich das Sichtfeld des Lichtempfänger 240 in einer Empfangsrichtung E darauf gerichtet ist. Erfindungsgemäß ist also auch das Streulichtzentrum, das Schnittvolumen zwischen dem Sichtfeld des Lichtempfängers 240 und dem Lichtstrahl 231 des Lichtsenders 230 innerhalb eines Strömungsabschnitts des Rohr- und/oder Schlauchsystems 110 ausgebildet. Ein zwischen dem Überschneidungsbereich X und dem Lichtempfänger 240 verlaufender Streulichtpfad 310 kann hierbei wahlweise und/oder bedarfsweise direkt oder indirekt ausgebildet werden. Weitere Schritte zur Auswertung des erfassten Streulichtanteils auf das Vorliegen eines Brands oder einer Brandgefahr oder der Gefahr einer Brandentstehung sind hinreichend aus dem Stand der Technik bekannt.

### Bezugszeichen

- 100: Ansaugbranderkennungssystem
- 110: Rohr- und/oder Schlauchsystem
- 111: erster Rohrzweig
- 112: zweiter Rohrzweig
- 113: Zuführleitung
- 120: Ansaugöffnung
- 130: Ansaugeinrichtung
- 140: Gehäuse

- 200: Streulichtdetektor
- 210: Prüfbereich
- 211: Prüfbereichsumwandung
- 212: Strömungseinlass
- 213: Strömungsauslass
- 214: Ausnehmung
- 220: Leiterplatte
- 221: Trenneinrichtung
- 230: Lichtsender
- 231: Lichtstrahl
- 232: Lichtwellenleiter
- 233: Streulichtanteil
- 240: Lichtempfänger
- 240a, 240b, 240c: Lichtnebenempfänger
- 241: Lichtwellenleiter
- 241a, 241b, 241c: Lichtwellenleiter
- 242a, 242b, 242c: oberflächenmontierte Bauteile
- 243: Polarisationsfilter
- 243a, 243b, 243c: Polarisationsfilter
- 250: Lichtfalle
- 261: erste planare Optik
- 262: zweite planare Optik

- 300: Überwachungsraum
- 310: Strömungspfad
- 320: Rauchpartikel

- A: Ausstrahlrichtung
- D: Detektionsvolumen
- E: Empfangsrichtung
- P: Strömungsrichtung
- S: Streulichtpfad
- X: Überschneidungsbereich

- α: Streuwinkel
- β: Detektionswinkel

## Patentansprüche

1. Streulichtdetektor (200) zur Detektion von Partikeln, insbesondere Rauchpartikeln (320) in einem Prüffluid, zur Verwendung in einem Ansaugbranderkennungssystem (100), mit
- einem Prüfbereich (210), welcher zur Ausbildung eines von dem Prüffluid durchströmbaren Strömungspfads (310) einen Strömungseinlass (212) und einen Strömungsauslass (213) aufweist,
- einem Lichtsender (230), welcher einen Lichtstrahl (231) in einer Ausstrahlrichtung (A) sendet, wobei der gesendete Lichtstrahl (231) einen Überschneidungsbereich (X) mit dem Strömungspfad (310) bildet,
- einem Lichtempfänger (240) zum Empfang eines im Überschneidungsbereich (X) an Partikeln (320) gestreuten Streulichtanteils (233),
- einer Leiterplatte (220), wobei der Lichtsender (230) und der Lichtempfänger (240) mit einer dem Prüfbereich (210) zugewandten Vorderseite der Leiterplatte (220) als oberflächenmontierbare Bauteile verbunden sind, und
- der Lichtempfänger (240) derart angeordnet ist, dass ein direkter oder indirekter Streulichtpfad (S) zwischen dem Lichtempfänger (240) und dem Überschneidungsbereich (X) verläuft,
**dadurch gekennzeichnet, dass**
- der Prüfbereich (210) durch eine Prüfbereichsumwandung (211) begrenzt ist, wobei die Prüfbereichsumwandung (211) eine oder mehrere Ausnehmungen (214) zur Aufnahme von optischen Bauteilen und/oder zur Erzeugung mehrerer Lichtdurchlässe aufweist, wobei
- der Lichtsender (230) und der Lichtempfänger (240) sowie die den Lichtsender (230) und den Lichtempfänger (240) aufweisende Leiterplatte (220) außerhalb der den Prüfbereich (210) begrenzenden Prüfbereichsumwandung (211) angeordnet ist,
- der von dem Lichtsender (230) gesendete Lichtstrahl (231) mittels eines den Lichtstrahl (231) umlenkenden Lichtwellenleiters (232) in den Prüfbereich (210) geleitet wird, wobei der Lichtstrahl (231) in das Medium des Lichtwellenleiters (232) eintritt und in dessen Inneren weitergeleitet wird,
- der Lichtwellenleiter (232) innerhalb einer der Ausnehmungen (214) der Prüfbereichsumwandung (211) mündet, von einer der Ausnehmungen (214) aufgenommen wird oder eine der Ausnehmungen (214) durchsetzt, und
- innerhalb des zwischen dem Lichtempfänger (240) und dem Überschneidungsbereich (X) verlaufenden direkten Streulichtpfads (S) ein Lichtdurchlass oder ein nicht reflektierendes optisches Bauteil angeordnet und/oder
- der zwischen dem Lichtempfänger (240) und dem Überschneidungsbereich (X) verlaufende indirekte Streulichtpfad (S) mittels eines, innerhalb einer der Ausnehmungen (214) der Prüfbereichsumwandung (211) und im Sichtfeld des Lichtempfängers (240) angeordneten Lichtwellenleiters (232) ausgebildet ist.

2. Streulichtdetektor (200) nach Anspruch 1,
**dadurch gekennzeichnet, dass**
der von dem Lichtsender (230) gesendete Lichtstrahl (231) in einer entlang des Strömungspfads (310) gerichteten Ausstrahlrichtung (A) verläuft.

3. Streulichtdetektor (200) nach Anspruch 1,
**dadurch gekennzeichnet, dass**
der von dem Lichtsender (230) gesendete Lichtstrahl (231) in einer auf den Strömungspfad (310) gerichteten Ausstrahlrichtung (A) verläuft.

4. Streulichtdetektor (200) nach einem der Ansprüche 1 - 3,
**dadurch gekennzeichnet, dass**
der zwischen dem Lichtempfänger (240) und dem Überschneidungsbereich (X) verlaufende indirekte Streulichtpfad (S) mittels eines den gestreuten Streulichtanteil (233) umlenkenden Lichtwellenleiters (241) ausgebildet ist.

5. Streulichtdetektor (200) nach einem der vorhergehenden Ansprüche,
**dadurch gekennzeichnet, dass**
eine erste planare Optik (261) zum Fokussieren des Lichtstrahls (231) zwischen dem Lichtsender (230) und dem Überschneidungsbereich (X) angeordnet ist und/oder eine zweite planare Optik (262) zum Fokussieren eines entlang des Streulichtpfads (S) gestreuten Streulichtanteils (233), zwischen dem Lichtempfänger (240) und dem Überschneidungsbereich (X) angeordnet ist.

6. Streulichtdetektor (200) nach einem der vorhergehenden Ansprüche,
**dadurch gekennzeichnet, dass**
der Lichtwellenleiter (232, 241) und/oder die erste planare Optik (261) und/oder die zweite planare Optik (262) und/oder weitere optische Bauteile außerhalb des Prüfbereichs (210), insbesondere außerhalb der den Prüfbereich (210) begrenzenden Prüfbereichsumwandung (211), angeordnet sind.

7. Streulichtdetektor (200) nach einem der vorhergehenden Ansprüche,
**dadurch gekennzeichnet, dass**
innerhalb des zwischen dem Lichtempfänger (240) und dem Überschneidungsbereich (X) verlaufenden direkten Streulichtpfads (S) ein Lichtdurchlass oder ein nicht reflektierendes optisches Bauteil angeordnet ist oder der zwischen dem Lichtempfänger (240) und dem Überschneidungsbereich (X) verlaufende indirekte Streulichtpfad (S) mittels eines, innerhalb einer der Ausnehmungen (214) angeordneten Lichtwellenleiters (241) ausgebildet ist.

8. Streulichtdetektor (200) nach einem der vorhergehenden Ansprüche,
**dadurch gekennzeichnet, dass**
ein oder mehrere zusätzliche Lichtempfänger als Lichtnebenempfänger (240a, 240b, 240c) mit der Leiterplatte (220), insbesondere einer Vorderseite der Leiterplatte (220) verbunden sind.

9. Streulichtdetektor (200) nach Anspruch 8,
**dadurch gekennzeichnet, dass**
der eine oder die mehreren Lichtnebenempfänger (240a, 240b, 240c) derart angeordnet sind, dass ein direkter oder indirekter Streulichtpfad (S) zwischen dem jeweiligen Lichtnebenempfänger (240a, 240b, 240c) und dem Überschneidungsbereich (X) verläuft.

10. Streulichtdetektor (200) nach einem der Ansprüche 8 oder 9,
**dadurch gekennzeichnet, dass**
eine oder mehrere zweite planare Optiken (262) zum Fokussieren eines Streulichtanteils (233) in einem jeweiligen Streulichtpfad (S) zwischen dem einen oder den mehreren Lichtnebenempfängern (240a, 240b, 240c) und dem Überschneidungsbereich (X) angeordnet sind.

11. Ansaugbranderkennungssystem (100) mit einem Streulichtdetektor (200) nach einem der Ansprüche 1 - 10, wobei das Ansaugbranderkennungssystem (100) eine oder mehrere Ansaugöffnungen (120), die zum Ansaugen eines Prüffluids in einem oder mehreren Überwachungsräumen (300) angeordnet sind, ein Rohr- und/oder Schlauchsystem (110) zur fluidleitenden Verbindung der einen oder der mehreren Ansaugöffnungen (120) mit dem Streulichtdetektor (200) und eine Ansaugeinrichtung (130) zur Erzeugung einer Strömung und/oder eines Unterdrucks innerhalb des Rohr- und/oder Schlauchsystems (110) aufweist,
**dadurch gekennzeichnet, dass**
ein Prüfbereich (210) des Streulichtdetektors (230) als integrierter Bestandteil des Rohr- und/oder Schlauchsystems (110) ausgebildet ist, indem der Prüfbereich (210) als ein Strömungsabschnitt des Rohr- und/oder Schlauchsystems (110) ausgebildet ist.

12. Ansaugbranderkennungssystem (100) nach Anspruch 11,
**dadurch gekennzeichnet, dass**
eine den Prüfbereich (210) begrenzende Prüfbereichsumwandung (211) einen Strömungseinlass (212) aufweist, der zur Ausbildung und/oder Ausrichtung eines Strömungspfads (310) innerhalb des Prüfbereichs (210), in Strömungsrichtung (P) des Prüffluids, vor dem Prüfbereich (210) angeordnet ist und einen Strömungsauslass (213) aufweist, der in Strömungsrichtung (P) des Prüffluids nach dem Prüfbereich (210) und vor der Ansaugeinrichtung (130) angeordnet ist.

13. Verfahren zur Detektion von in einem Prüffluid enthaltenen Partikeln, insbesondere Rauchpartikeln (320), insbesondere zur Erkennung eines Brands und/oder einer Brandentstehung, unter Verwendung eines Streulichtdetektors (200) nach einem der Ansprüche 1 - 10, welcher Streulichtdetektor (200) einen Lichtsender (230) zur Ausbildung eines Überschneidungsbereichs (X) mit dem Prüffluid und einen Lichtempfänger (240) zur Detektion von innerhalb des Überschneidungsbereichs (X) gestreutem Streulicht aufweist, wobei ein Prüffluid mittels einer oder mehrerer Ansaugöffnungen (120) kontinuierlich aus einem oder mehreren Überwachungsräumen (300) entnommen und mittels eines fluidleitenden Rohr- und/oder Schlauchsystems (110) dem Streulichtdetektor (200) zugeführt wird,
**dadurch gekennzeichnet, dass**
der Überschneidungsbereich (X) innerhalb des Rohr- und/oder Schlauchsystems (110) ausgebildet wird und der Lichtempfänger (240) zur Ausbildung eines Detektionsvolumens (D) auf den Überschneidungsbereich (X) gerichtet ist, wobei
- ein das Prüffluid führender Strömungspfad (310) entlang eines Strömungsabschnitts des Rohr- und/oder Schlauchsystems (110) erzeugt wird und
- der Lichtsender (230) einen Lichtstrahl (231) in einer auf den Strömungspfad (310) oder entlang des Strömungspfads (310) gerichteten Ausstrahlrichtung (A) sendet, wobei der gesendete Lichtstrahl (231) den Überschneidungsbereich (X) mit dem Strömungspfad (310) ausbildet.

## Claims

1. A scattered light detector (200) for detecting particles, especially smoke particles (320) in a test fluid, for use in an intake fire detection system (100), with
- a test area (210) which has a flow inlet (212) and a flow outlet (213) to form a flow path (310) through which the test fluid can flow,
- a light transmitter (230) which emits a light beam (231) in the direction of the emission (A), wherein the emitted light beam (231) forms an overlapping area (X) with the flow path (310),
- a light receiver (240) for receiving a scattered light component (233) scattered at particles (320) in the overlapping area (X),
- a printed circuit board (220), wherein the light transmitter (230) and the light receiver (240) are connected to a front side of the printed circuit board (220) facing the test area (210) as surface-mountable components, and
- the light receiver (240) is arranged in such a way that a direct or indirect path of scattered light (S) runs between the light receiver (240) and the overlapping area (X),
**characterised in that**
- the test area (210) is bounded by a test area wall (211), the test area wall (211) having one or more recesses (214) for accommodating optical components and/or for generating a plurality of light apertures, wherein
- the light transmitter (230) and the light receiver (240) as well as the printed circuit board (220) comprising the light transmitter (230) and the light receiver (240) are arranged outside the test area wall (211) delimiting the test area (210),
- the light beam (231) transmitted by the light transmitter (230) is guided into the test area (210) by means of a fibre optic cable (232) which deflects the light beam (231), the light beam (231) entering the medium of the fibre optic cable (232) and being passed on inside the latter,
- the fibre optic cable (232) opens out within one of the recesses (214) of the test area wall (211), is received by one of the recesses (214) or passes through one of the recesses (214), and
- a light aperture or a non-reflective optical component is arranged within the direct scattered light path (S) extending between the light receiver (240) and the overlapping area (X) and/or
- the indirect path of scattered light (S) extending between the light receiver (240) and the overlapping area (X) is formed by means of a fibre optic cable (232) arranged within one of the recesses (214) of the test area wall (211) and in the field of view of the light receiver (240).

2. The scattered light detector (200) in accordance with claim 1,
**characterised in that**
the light beam (231) emitted by the light transmitter (230) runs in an emission direction (A) that is directed along the flow path (310).

3. The scattered light detector (200) in accordance with claim 1,
**characterised in that**
the light beam (231) emitted by the light transmitter (230) extends in an emission direction (A) that is directed towards the flow path (310).

4. The scattered light detector (200) in accordance with any one of claims 1 - 3,
**characterised in that**
the indirect path of scattered light (S) extending between the light receiver (240) and the overlapping area (X) is formed by means of a fibre optic cable (241) deflecting the scattered light component (233).

5. The scattered light detector (200) in accordance with any one of the preceding claims,
**characterised in that**
a first planar optical system (261) for focussing the light beam (231) is arranged between the light transmitter (230) and the overlapping area (X) and/or a second planar optical system (262) for focussing a scattered light component (233) scattered along the scattered light path (S) and which is arranged between the light receiver (240) and the overlapping area (X).

6. The scattered light detector (200) in accordance with any one of the preceding claims,
**characterised in that**
the fibre optic cable (232, 241) and/or the first planar optic system (261) and/or the second planar optic system (262) and/or further optical components are arranged outside the test area (210), especially outside the test area wall (211) delimiting the test area (210).

7. The scattered light detector (200) in accordance with any one of the preceding claims,
**characterised in that**
a light aperture or a non-reflective optical component is arranged within the direct path of scattered light (S) extending between the light receiver (240) and the overlapping area (X), or the indirect path of scattered light (S) extending between the light receiver (240) and the overlapping area (X) is formed by means of an optical fibre (241) arranged within one of the recesses (214).

8. The scattered light detector (200) in accordance with any one of the preceding claims,
**characterised in that**
one or more additional light receivers are connected as secondary light receivers (240a, 240b, 240c) to the printed circuit board (220), especially to a front side of the printed circuit board (220).

9. The scattered light detector (200) in accordance with claim 8,
**characterised in that**
the one or more secondary light receivers (240a, 240b, 240c) are arranged in such a way that a direct or indirect path of scattered light (S) runs between the respective secondary light receiver (240a, 240b, 240c) and the overlapping area (X).

10. The scattered light detector (200) in accordance with either claim 8 or 9,
**characterised in that**
one or more second planar optics (262) for focussing a scattered light component (233) are arranged in a respective path of scattered light (S) between the one or more secondary light receiver (240a, 240b, 240c) and the overlapping area (X).

11. An intake fire detection system (100) comprising a scattered light detector (200) in accordance with any one of claims 1 -10, wherein the intake fire detection system (100) comprises one or more aspirating openings (120) arranged for aspirating a test fluid in one or more monitored spaces (300), a pipe and/or hose system (110) for a fluid-conducting connection of the one or more intake openings (120) to the scattered light detector (200) and a suction device (130) for generating a flow and/or a negative pressure within the pipe and/or hose system (110),
**characterised in that**
a test area (210) of the scattered light detector (230) is designed as an integral component of the pipe and/or hose system (110), **in that** the test area (210) is designed as a flow section of the pipe and/or hose system (110).

12. The intake fire detection system (100) in accordance with claim 11,
**characterised in that**
a test area wall (211) delimiting the test area (210) has a flow inlet (212) which is arranged upstream of the test area (210) to form and/or align a flow path (310) within the test area (210), in the direction of flow (P) of the test fluid, and has a flow outlet (213) which is arranged downstream of the test area (210) and upstream of the intake device (130) in the direction of flow (P) of the test fluid.

13. A method for detecting particles contained in a test fluid, especially smoke particles (320), and especially for recognising a fire and/or the development of a fire, using a scattered light detector (200) according to any one of claims 1 -10, wherein the scattered light detector (200) has a light transmitter (230) for forming an overlapping area (X) with the test fluid and a light receiver (240) for detecting scattered light that has been scattered within the overlapping area (X) and wherein a test fluid is continuously withdrawn from one or more monitored spaces (300) by means of one or more suction openings (120) and supplied to the scattered light detector (200) by means of a fluid-conducting pipe and/or hose system (110),
**characterised in that**
the overlapping area (X) is formed within the pipe and/or hose system (110) and the light receiver (240) is directed towards the overlapping area (X) to form a detection volume (D), wherein
- a flow path (310) carrying the test fluid is generated along a flow section of the pipe and/or hose system (110), and
- the light transmitter (230) emits a light beam (231) in an emission direction (A) directed towards the flow path (310) or along the flow path (310), wherein the emitted light beam (231) forms the overlapping area (X) with the flow path (310).

## Revendications

1. Détecteur de lumière diffusée (200) destiné à détecter des particules, notamment des particules de fumée (320) dans un fluide de contrôle, destiné à être utilisé dans un système de détection d'incendie par aspiration (100), comprenant
- une zone de contrôle (210), laquelle possède une entrée d'écoulement (212) et une sortie d'écoulement (213) en vue de former un trajet d'écoulement (310) qui peut être traversé par le fluide de contrôle,
- un émetteur de lumière (230), lequel émet un faisceau lumineux (231) dans une direction de rayonnement (A), le faisceau lumineux (231) émis formant une zone d'intersection (X) avec le trajet d'écoulement (310),
- un récepteur de lumière (240) destiné à recevoir une partie de lumière diffusée (233) diffusée dans la zone d'intersection (X) au niveau de particules (320),
- une carte à circuit imprimé (220), l'émetteur de lumière (230) et le récepteur de lumière (240) étant reliés à un côté avant de la carte à circuit imprimé (220) qui est orienté vers la zone de contrôle (210) sous la forme de composants pouvant être montés en surface, et
- le récepteur de lumière (240) est disposé de telle sorte qu'un trajet de lumière diffusée (S) direct ou indirect suit un tracé entre le récepteur de lumière (240) et la zone d'intersection (X),
**caractérisé en ce que**
- la zone de contrôle (210) est délimitée par une paroi de zone de contrôle (211), la paroi de zone de contrôle (211) possédant un ou plusieurs évidements (214) destinés à recevoir des composants optiques et/ou à générer plusieurs passages de lumière,
- l'émetteur de lumière (230) et le récepteur de lumière (240) ainsi que la carte à circuit imprimé (220) qui comporte l'émetteur de lumière (230) et le récepteur de lumière (240) étant disposés à l'extérieur de la paroi de zone de contrôle (211) qui délimite la zone de contrôle (210),
- le faisceau lumineux (231) émis par l'émetteur de lumière (230) étant guidé dans la zone de contrôle (210) au moyen d'un guide d'ondes optiques (232) qui dévie le faisceau lumineux (231), le faisceau lumineux (231) pénétrant dans le milieu du guide d'ondes optiques (232) et étant transmis à l'intérieur de celui-ci,
- le guide d'ondes optiques (232) débouchant à l'intérieur de l'un des évidements (214) de la paroi de zone de contrôle (211), étant accueilli par l'un des évidements (214) ou traversant l'un des évidements (214), et
- un passage de lumière ou un composant optique non réfléchissant étant disposé à l'intérieur du trajet de lumière diffusée (S) direct qui suit un tracé entre le récepteur de lumière (240) et la zone d'intersection (X) et/ou
- le trajet de lumière diffusée (S) indirect qui suit un tracé entre le récepteur de lumière (240) et la zone d'intersection (X) est formé au moyen d'un guide d'ondes optiques (232) disposé à l'intérieur de l'un des évidements (214) de la paroi de zone de contrôle (211) et dans le champ de vision du récepteur de lumière (240).

2. Détecteur de lumière diffusée (200) selon la revendication 1,
**caractérisé en ce que**
le faisceau lumineux (231) émis par l'émetteur de lumière (230) suit un tracé dans une direction de rayonnement (A) dirigée le long du trajet d'écoulement (310).

3. Détecteur de lumière diffusée (200) selon la revendication 1,
**caractérisé en ce que**
le faisceau lumineux (231) émis par l'émetteur de lumière (230) suit un tracé dans une direction de rayonnement (A) dirigée vers le trajet d'écoulement (310).

4. Détecteur de lumière diffusée (200) selon l'une des revendications 1 à 3,
**caractérisé en ce que**
le trajet de lumière diffusée (S) indirect qui suit un tracé entre le récepteur de lumière (240) et la zone d'intersection (X) est formé au moyen d'un guide d'ondes optiques (241) qui dévie la partie de lumière diffusée (233).

5. Détecteur de lumière diffusée (200) selon l'une des revendications précédentes,
**caractérisé en ce que**
une première optique plane (261) destinée à focaliser le faisceau lumineux (231) est disposée entre l'émetteur de lumière (230) et la zone d'intersection (X) et/ou une deuxième optique plane (262) destinée à focaliser une partie de lumière diffusée (233) diffusée le long du trajet de lumière diffusée (S) est disposée entre le récepteur de lumière (240) et la zone d'intersection (X).

6. Détecteur de lumière diffusée (200) selon l'une des revendications précédentes,
**caractérisé en ce que**
le guide d'ondes optiques (232, 241) et/ou la première optique plane (261) et/ou la deuxième optique plane (262) et/ou d'autres composants optiques sont disposés à l'extérieur de la zone de contrôle (210), en particulier à l'extérieur de la paroi de zone de contrôle (211) qui délimite la zone de contrôle (210).

7. Détecteur de lumière diffusée (200) selon l'une des revendications précédentes,
**caractérisé en ce que**
un passage de lumière ou un composant optique non réfléchissant est disposé à l'intérieur du trajet de lumière diffusée (S) direct qui suit un tracé entre le récepteur de lumière (240) et la zone d'intersection (X) ou le trajet de lumière diffusée (S) indirect qui suit un tracé entre le récepteur de lumière (240) et la zone d'intersection (X) est formé au moyen d'un guide d'ondes optiques (241) disposé à l'intérieur de l'un des évidements (214).

8. Détecteur de lumière diffusée (200) selon l'une des revendications précédentes,
**caractérisé en ce que**
un ou plusieurs récepteurs de lumière supplémentaires sont reliés en tant que récepteurs de lumière secondaires (240a, 240b, 240c) à la carte à circuit imprimé (220), notamment à un côté avant de la carte à circuit imprimé (220).

9. Détecteur de lumière diffusée (200) selon la revendication 8,
**caractérisé en ce que**
le ou les récepteurs de lumière secondaires (240a, 240b, 240c) sont disposés de telle sorte qu'un trajet de lumière diffusée (S) direct ou indirect suit un tracé entre le récepteur de lumière secondaire (240a, 240b, 240c) respectif et la zone d'intersection (X).

10. Détecteur de lumière diffusée (200) selon l'une des revendications 8 ou 9,
**caractérisé en ce que**
une ou plusieurs deuxièmes optiques planes (262) destinées à focaliser une partie de lumière diffusée (233) sont disposées dans un trajet de lumière diffusée (S) respectif entre les un ou plusieurs récepteurs de lumière secondaires (240a, 240b, 240c) et la zone d'intersection (X).

11. Système de détection d'incendie par aspiration (100) comprenant un détecteur de lumière diffusée (200) selon l'une des revendications 1 à 10, le système de détection d'incendie par aspiration (100) comprenant une ou plusieurs ouvertures d'aspiration (120) qui sont disposées dans un ou plusieurs espaces de surveillance (300) pour aspirer un fluide de contrôle, un système de tubes et/ou de tuyaux (110) destiné à la liaison fluidique de l'une ou des plusieurs ouvertures d'aspiration (120) avec le détecteur de lumière diffusée (200) et un dispositif d'aspiration (130) destiné à générer un écoulement et/ou une dépression à l'intérieur du système de tubes et/ou de tuyaux (110),
**caractérisé en ce que**
une zone de contrôle (210) du détecteur de lumière diffusée (230) est réalisée en tant que partie intégrante du système de tubes et/ou de tuyaux (110), par le fait que la zone de contrôle (210) est réalisée sous la forme d'une section d'écoulement du système de tubes et/ou de tuyaux (110).

12. Système de détection d'incendie par aspiration (100) selon la revendication 11,
**caractérisé en ce que**
une paroi de zone de contrôle (211) qui délimite la zone de contrôle (210) possède une entrée d'écoulement (212), laquelle est disposée avant la zone de contrôle (210) dans la direction d'écoulement (P) du fluide de contrôle afin de former et/ou d'orienter un trajet d'écoulement (310) à l'intérieur de la zone de contrôle (210) et possède une sortie d'écoulement (213) qui, dans la direction d'écoulement (P) du fluide de contrôle, est disposée après la zone de contrôle (210) et avant le dispositif d'aspiration (130).

13. Procédé de détection de particules contenues dans un fluide de contrôle, notamment de particules de fumée (320), en particulier pour la reconnaissance d'un incendie et/ou d'un début d'incendie, en utilisant un détecteur de lumière diffusée (200) selon l'une des revendications 1 à 10, lequel détecteur de lumière diffusée (200) possède un émetteur de lumière (230) destiné à former une zone d'intersection (X) avec le fluide de contrôle et un récepteur de lumière (240) destiné à détecter la lumière diffusée à l'intérieur de la zone d'intersection (X), un fluide de contrôle étant prélevé en continu au moyen d'une ou plusieurs ouvertures d'aspiration (120) dans une ou plusieurs chambres de contrôle (300) et étant acheminé au détecteur de lumière diffusée (200) au moyen d'un système de tubes et/ou de tuyaux (110) conduisant le fluide,
**caractérisé en ce que**
la zone d'intersection (X) est formée à l'intérieur du système de tubes et/ou de tuyaux (110) et le récepteur de lumière (240) est dirigé vers la zone d'intersection (X) en vue de former un volume de détection (D),
- un trajet d'écoulement (310) qui guide le fluide de contrôle étant généré le long d'une portion d'écoulement du système de tubes et/ou de tuyaux (110), et
- l'émetteur de lumière (230) émettant un faisceau lumineux (231) dans une direction de rayonnement (A) dirigée vers le trajet d'écoulement (310) ou le long du trajet d'écoulement (310), le faisceau lumineux (231) émis formant la zone d'intersection (X) avec le trajet d'écoulement (310).
